(19) **Europäisches Patentamt**

**European Patent Office**

**Office européen des brevets**

(11) **EP 0 511 862 B1**

(12) **EUROPEAN PATENT SPECIFICATION**

(45) Date of publication and mention of the grant of the patent:
**02.07.1997 Bulletin 1997/27**

(51) Int Cl.6: **G11B 5/596**

(21) Application number: **92303907.7**

(22) Date of filing: **30.04.1992**

(54) **Magnetic disk drive units**

Magnetplatteneinheit

Unité de disque magnétique

(84) Designated Contracting States:
**DE FR GB**

(30) Priority: **30.04.1991 JP 98506/91**
**30.04.1991 JP 98509/91**

(43) Date of publication of application:
**04.11.1992 Bulletin 1992/45**

(60) Divisional application: **96117255.8**

(73) Proprietor: **FUJITSU LIMITED**
**Kawasaki-shi, Kanagawa 211 (JP)**

(72) Inventors:
• **Narita, Teruyuki, c/o Fujitsu Limited**
**Kawasaki-shi, Kanagawa 211 (JP)**
• **Tsunekawa, Masao, c/o Fujitsu Limited**
**Kawasaki-shi, Kanagawa 211 (JP)**
• **Tanaka, Hideaki, c/o Fujitsu Limited**
**Kawasaki-shi, Kanagawa 211 (JP)**
• **Sato, Atsushi**
**Higashine-shi, Yagamata 999-37 (JP)**

(74) Representative:
**Fane, Christopher Robin King et al**
**Haseltine Lake & Co.,**
**Imperial House,**
**15-19 Kingsway**
**London WC2B 6UD (GB)**

(56) References cited:
**EP-A- 0 063 935** **EP-A- 0 173 844**
**EP-A- 0 285 452** **US-A- 4 766 508**
**US-A- 4 833 551**

• **PATENT ABSTRACTS OF JAPAN vol. 10, no. 80 (P-441)29 March 1986 & JP-A-60 217 572**
• **PATENT ABSTRACTS OF JAPAN vol. 13, no. 91 (P-837)3 March 1989 & JP-A-63 273 284**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

## Description

The present invention relates to magnetic disk drive units, and in particular to magnetic disk drive units in which the position of a head is controlled according to servo information recorded on a servo disk.

To increase the storage capacity of a magnetic disk unit it is possible to increase the number of disk media arranged on a disk element, the number of heads, and/or a track density.

When the storage media and track density are increased, a data head that is controlled to be ontrack on a data surface according to servo information recorded on a servo surface can easily miss its intended track if the operating environment of the unit changes, in particular, if ambient temperature changes from low to high, or from high to low. If the data head misses its track in this way, no data can of course be read.

To prevent such data head "off-track" due to an ambient temperature change, an offset (an off-track quantity) of the data head with respect to an on-track position can be measured at regular intervals by reading servo information recorded on a disk surface.

When accessing a track for reading or writing data, an offset correction operation is carried out to displace a selected data head to eliminate such an offset.

Even if a positional deviation occurs between a servo surface and a data surface due to a change in ambient temperature, the above technique can control the data head with sufficient precision that the head attains its intended on-track position.

A sensitivity of reading signals on the servo information on the data surface is dependent on head clearance and amplifier characteristics, so that a proportional coefficient based on a fixed sensitivity is insufficient to correctly detect an off-track state. An improvement is desired in this regard.

The above matters will now be discussed in more detail.

In a magnetic disk unit, a rotary shaft of a spindle motor may carry, for example, four magnetic disks, which are rotated at a constant speed.

Among the magnetic disks both faces of the upper three disks and an upper face of the bottom disk have data surfaces, and a lower face of the bottom disk has a servo surface.

Data heads are disposed on the data surfaces of the magnetic disks, and a servo head is disposed on the servo surface.

The data heads and servo head are driven together by a voice coil motor (hereinafter referred to as the VCM), to cross tracks on the magnetic disks.

The servo surface on which the servo head is disposed has servo information recorded at every cylinder position. Signals read by the servo head provide positional signals indicating the track where the servo head is located.

The data surfaces on which the data heads are disposed have servo information, which is recorded on tracks of a specific cylinder or in a vacant space of a sector of every cylinder, and used to detect offsets of the data heads.

The servo head and data head 2 are ideally on a cylinder center, so that no offset correction is needed. Due to a difference in expansion coefficients of metals used for a head actuator, the center of the data head usually deviates from the cylinder center where the servo head is located.

The offset of the data head may involve:

(1) a thermal offset caused by a difference in expansion coefficients of the head actuator by ambient temperature;
(2) an external force offset caused by an external force applied on the head actuator; and
(3) an offset caused by magnetic forces of magnets that change depending on the rotational position of the VCM.

An offset of the data head is measured during operation of the magnetic disk unit, and stored in a memory. When positioning the head, the measured offset is removed by displacing the head, thereby correctly positioning the data head on the cylinder center.

The thermal offset of the above (1) may be measured for each data head, and the offset of one of the selected data heads may be corrected.

The external force offset of the above (2) must be measured for a specific head on all cylinders in principle. This, however, is troublesome, so that offsets of the head are measured for a predetermined number of cylinders, and the measured offset of a target cylinder is removed during a seek operation by supplying a predetermined current to the VCM to control speed.

The seek operation for removing the external force offset is disclosed in, for example, Japanese Unexamined Patent Publication (Kokai) No. 62-149082.

The servo information recorded on a data surface of a conventional magnetic disk unit is as follows. That is, first servo information A for a certain frequency signal, for example, a maximum write frequency signal is recorded on an optional track on the data surface at a position X μm outward from the ontrack position of a data head, and second servo information B at a position X μm inward from the ontrack position.

The servo information may be recorded on a specific track on a data surface, or in a vacant space of every sector on a data surface.

When the data head is ontrack, the head evenly reads the servo information A and B to provide identical signals $V_A$ and $V_B$.

When the data head is Y μm offtrack outwardly, the head reads the servo information A more than the servo information B, to provide a large signal $V_A$ and a small signal $V_B$.

When the data head is Y μm offtrack inwardly, the

head reads the servo information B more than the servo information A, to provide a large signal $V_B$ and a small signal $V_A$.

A servo control processor reads a differential signal $(V_A - V_B)$ of the signals $V_A$ and $V_B$ read by the data head and determines an offset.

A relationship between the offset and the differential signal $(V_A - V_B)$ can be represented with a certain proportional coefficient as indicated with a continuous line.

An output of the data head changes depending on a floating quantity of the head, a fluctuation in a head core width, and a circumferential speed. Accordingly, the relationship between the offset and the differential signal $(V_A - V_B)$ based on the servo information is not expressible with a constant proportional coefficient but differs from data head to data head. For example, some data heads show a poor sensitivity, i.e., a low proportional coefficient.

A technique that applies a constant proportional coefficient on output characteristics of every data head, therefore, cannot accurately correct an offset.

It may be attempted to solve this problem by providing an AGC region disposed in front of the servo information A and B.

Namely, an amplifier gain for providing a constant head output is determined on the AGC region. With this amplifier gain, signals read on the servo information A and B are amplified, so that a differential signal $(V_A - V_B)$ of the read signals may be constant for the same offset even if the output of the head changes.

EP-A-0063935 describes a magnetic disk drive unit which employs another method of adjusting the head amplifier gain so as to provide a constant head output. This magnetic disk drive unit may be considered to include: a magnetic disk having a data storage surface whereon there are predetermined tracks for storing data applied to the unit and for storing, at a preselected location along one of those tracks, predetermined servo information comprising a first item of information offset to a predetermined extent to one side of an intended tracking line and a second item of information offset to a predetermined extent to the opposite side of the said intended tracking line; a read/write head arranged in opposition to the said data storage surface, and movable thereover between the said data tracks, for reading data from that surface or writing data thereon; head offset detecting circuitry connected with the said read/write head for processing signals derived respectively from the said first and second items of information to produce a difference signal that is employed to derive a measure of the distance by which the read/write head is offset from the said intended tracking line; and drive means arranged and connected for moving the said read/write head, in dependence upon the distance measure derived from the said difference signal, so as to reduce the said distance by which the said read/write head is offset from the said intended tracking line. In this disk drive unit the use of an AGC region is avoided by providing an AGC circuit which controls the head amplifier gain such that the sum $(V_A + V_B)$ of the two signals derived respectively from the first and second items of servo information A,B is made constant.

Even with such an AGC region or AGC circuit, a relationship between an offset and the difference signal $(V_A - V_B)$ derived from the servo information A and B does not always follow the proportional constant but fluctuates depending on fluctuations in the amplifier gain and head writing and reading divergences. Thus, there is still a problem of inaccurate correction of offset.

According to the present invention the head offset detecting circuitry includes sensitivity detection means operable in a self-calibration mode of the circuitry to cause the said read/write head to be displaced parallel to the data storage surface and laterally with respect to the said one track from a first reading position to a second reading position separated from the first reading position, in a direction transverse to the said tracking line at the said preselected location, by a predetermined calibration distance, and to determine the respective values of the said difference signal at the said first and second reading positions and to employ the ratio of the said predetermined calibration distance to the difference between the said respective values to provide a measure of sensitivity of the read/write head; and the said distance measure is derived from the said difference signal in dependence upon that measure of head sensitivity.

Such a magnetic disk drive unit can correct for variations in head sensitivity which arise in servo signal detection on a data surface of the unit, so that the unit can correctly detect head offset from servo information on the data surface even when head output fluctuates.

In a preferred embodiment of the invention, the magnetic disk drive unit has a plurality of such data storage surfaces, on each of which there are predetermined tracks for storing data applied to the unit and for storing, at a preselected location along one of those tracks, predetermined servo information comprising a first item of information offset to a predetermined extent to one side of an intended tracking line and a second item of information offset to a predetermined extent to the opposite side of the said intended tracking line; and also having a plurality of such read/write heads arranged respectively in opposition to the said data storage surfaces, and movable thereover between the said data tracks, for reading data from the surface concerned or writing data thereon; and the said head offset detecting circuitry is operable, when in its said self-calibration mode, to perform an offset detection operation on a designated one of the read/write heads of the said plurality, in which operation the sensitivity detection means cause the designated read/write head to be displaced parallel to its opposed data storage surface and laterally with respect to the said one track of that surface from a first reading position to a second reading position separated from the first reading position, in a direction transverse to the said tracking line at the said preselected location on that surface, by a predetermined calibration distance, and determine the respective values of the said difference signal at the said first and second reading positions and employ the ratio of the said predetermined calibration distance to the difference between the said respective values to provide such a measure of sensitivity of the designated read/write head, whereafter such a distance measure for the designated read/write head is derived by multiplying the difference signal value by the said sensitivity measure for the designated head; the unit further including offset storage means for storing the distance measure for each head of the said plurality; and the said drive means being operable, when one of the read/write heads of the said plurality upon which such an offset detection operation has been performed is selected for reading or writing, to move the selected head, in dependence upon the stored distance measure for that head, so as to reduce the said distance by which that selected head is offset from its said intended tracking line during such reading or writing.

In a previously-considered offset detection process for use with a plurality of heads the offset of each head in turn is detected. A microprocessor for controlling a seek operation and an ontrack operation is entirely used for measuring an offset of a data head during the offset detection process, so that, if a host unit issues at this time a write or read command involving a seek operation, the higher (write or read) command will not be executed during the offset detection process. Only after the process is completed is the higher command executable. This may cause a delay in the higher command, and thus performance of the unit deteriorates.

Namely, once the offset detection process is started, a specific cylinder is sought, and a thermal offset of each data head is detected according to servo information recorded on data surfaces.

For measuring an external force offset, in principle all the cylinders on a specific data surface should be sought, to detect an offset for each cylinder.

Accordingly, the offset detection process may take about several hundreds of microseconds, i.e., several hundred times the time required for processing a higher command. In addition, the microprocessor for drive control is exclusively used for seek operations of the offset detection process. This may cause a delay in executing the higher command, thus regrading performance of the unit.

In particular, the offset detection process is carried out at very short intervals of, for example, one minute just after a power source is turned ON where ambient temperature widely changes. In this case, higher commands are frequently queued resulting in deterioration of throughput.

Further discussion of the above matters can be found in Japanese Unexamined Patent Publication (Kokai) No. 62-266781.

To address this problem, the preferred embodiment of the invention, having a plurality of read/write heads as described above, advantageously further comprises control means for controlling operation of the unit; and the said head offset detecting circuitry is operable, in response to a predetermined control signal applied to the circuitry, to initiate an offset detection process in which each of the read/write heads of the said plurality is designated in turn and the above-mentioned offset detection operation is performed thereon; and the circuitry is such that if, during the course of the said offset detection process, the said control means receives a command calling for a preselected operation, of a type different from the said offset detection process, execution of that process is suspended upon production of the said distance measure for the head being dealt with when the command is received, whereafter the said preselected operation is executed, the said offset detection process being resumed after completion of execution of that operation.

Such a magnetic disk drive unit can process higher commands as quickly as possible, even while the offset detection process is being carried out.

Reference will now be made, by way of example, to the accompanying drawings, in which:

Fig. 1 is a schematic diagram showing parts of a magnetic disk unit;

Fig. 2A, Fig. 2B and Fig. 2C are schematic diagrams illustrating an offset detection method and an offset correction method;

Fig. 3 is a schematic diagram illustrating the form in which servo information can be stored on a data surface;

Fig. 4 is a schematic diagram illustrating an example of a method of recording such servo information on a data surface;

Fig. 5 is a schematic diagram illustrating another method of recording such servo information on a data surface;

Fig. 6A, Fig. 6B and Fig. 6C are schematic diagrams illustrating servo information and read signals, based thereupon, detected when a data head is off-track;

Fig. 7 is a graph illustrating the relationship between differential signals derived from such servo information and offset values;

Fig. 8 is a schematic diagram illustrating information recorded, together with an AGC region, on a data surface;

Fig. 9 is an explanatory diagram showing signals derived from servo information on a data surface when such an AGC region is provided;

Fig. 10A is a schematic diagram showing parts of a magnetic disk unit embodying the present invention;

Fig. 10B is a graph corresponding to Fig. 7 for illustrating determination of a proportional constant by circuitry included in the unit of Fig. 10A;

Fig. 11 is a block diagram showing parts of a magnetic disk unit embodying the invention;

Fig. 12 is a block diagram of another magnetic disk unit embodying the present invention;

Fig. 13, comprising Fig. 13A and Fig. 13B, is a block diagram of a disk drive unit included in the magnetic disk unit of Fig. 12;

Fig. 14 is a flowchart relating to an offset detection process carried out by an offset detector included in the disk drive unit of Fig. 13;

Fig. 15 is a table illustrating the manner in which proportional coefficients obtained by the Fig. 14 offset detection process can be stored;

Fig. 16 is a table illustrating the manner in which offsets, based on proportional coefficients obtained by the Fig. 14 offset detection process, can be stored;

Fig. 17 is a block diagram showing parts of a conversion circuit included in the Fig. 13 disk drive unit;

Fig. 18 is a waveform diagram showing operating waveforms in the conversion circuit of Fig. 17;

Fig. 19, comprising Fig. 19A and Fig. 19B, is a chart illustrating another example of the offset detection process, involving an interrupt;

Fig. 20, comprising Fig. 20A and Fig. 20B, is a chart corresponding to Fig. 19 but relating to another example of the offset detecting process involving an interrupt;

Fig. 21 is a sectional plan view of a disk enclosure included in a magnetic disk unit embodying the invention; and

Fig. 22 is a sectional side view corresponding to Fig. 21

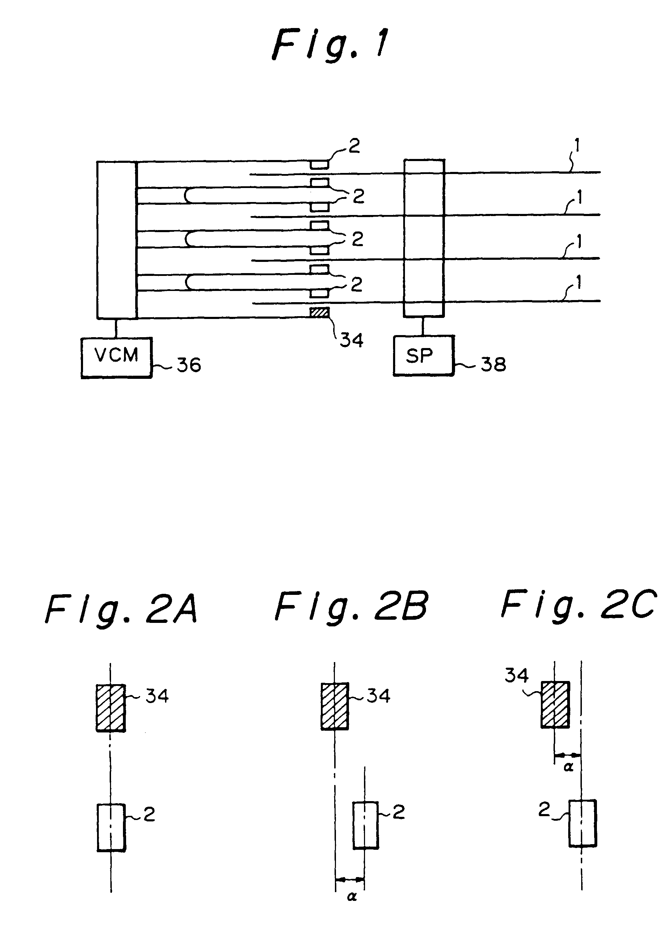

Figure 1 schematically shows a magnetic disk unit. A rotary shaft of a spindle motor 38 carries, for example, four magnetic disks 1, which are rotated at a constant speed.

Among the magnetic disks 1, both faces of the upper three disks and an upper face of the bottom disk have data surfaces, and a lower face of the bottom disk has a servo surface.

Data heads 2 are disposed on the data surfaces of the magnetic disks 1, and a servo head 34 is disposed on the servo surface.

The data heads 2 and servo head 34 are together driven by a voice coil motor to cross tracks on the magnetic disks 1.

The servo surface on which the servo head 34 is disposed has servo information recorded at every cylinder position. Signals read by the servo head 34 provide positional signals indicating the track where the servo head 34 is located.

The data surfaces on which the data heads 2 are disposed have servo information, which is recorded on tracks of a specific cylinder or in a vacant space of a sector of every cylinder, and used to detect offsets of the data heads 2.

Figures 2A, 2B, and 2C are explanatory views showing a detection of an offset of a data head.

In Fig. 2A, the servo head 34 and data head 2 are on a cylinder center (dot-and-dash line), so that no offset correction is needed. In practice, however, because of a difference in expansion coefficients of metals used for a head actuator, the center of the data head 2 usually deviates from the cylinder center where the servo head 34 is located, as shown in Fig. 2B.

The causes of the offset of the data head 2 discussed in the introduction to the present specification.

An offset $\alpha$ of the data head 2 shown in Fig. 2B is measured during an operation of the magnetic disk unit, and stored in a memory. When positioning the head, the measured offset $\alpha$ is removed by displacing the head, thereby correctly positioning the data head 2 on the cylinder center.

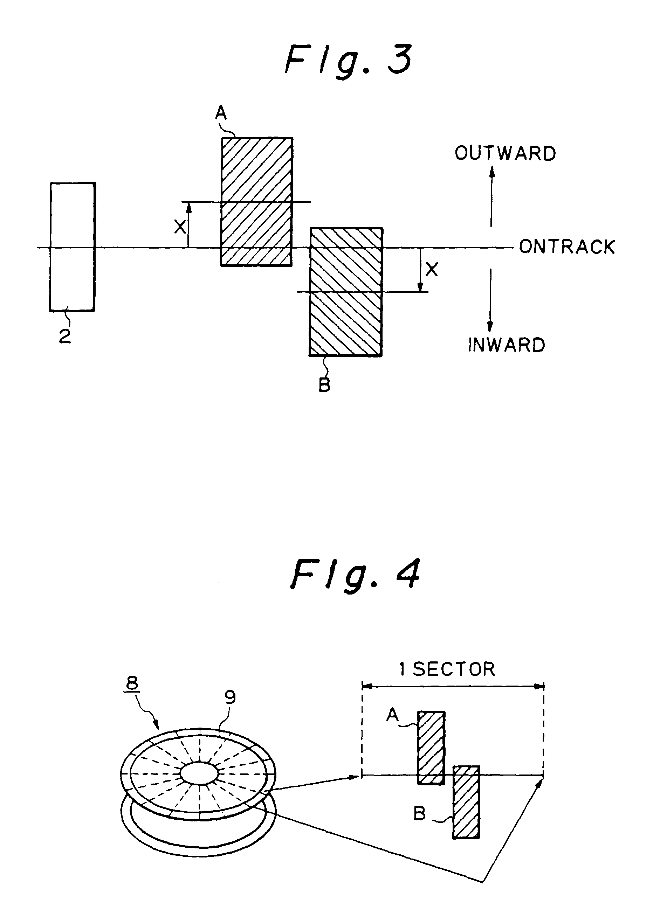

Figure 3 shows servo information recorded on a data surface of a magnetic disk unit.

In Fig. 3, first servo information A for a certain frequency signal, for example, a maximum write frequency signal is recorded on an optional track on the data surface at a position X $\mu$m outward from the ontrack position of a data head 2, and second servo information B at a position X $\mu$m inward from the ontrack position.

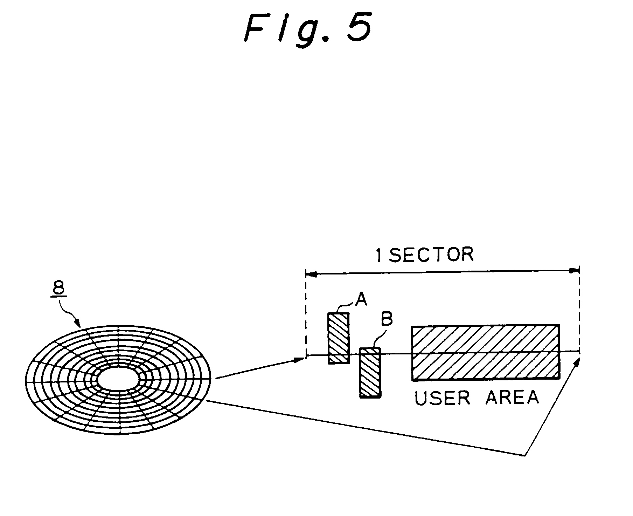

The servo information may be recorded on a specific track 9 on a data surface 8 as shown in Fig. 4, or in a vacant space of every sector on a data surface 8 as shown in Fig. 5.

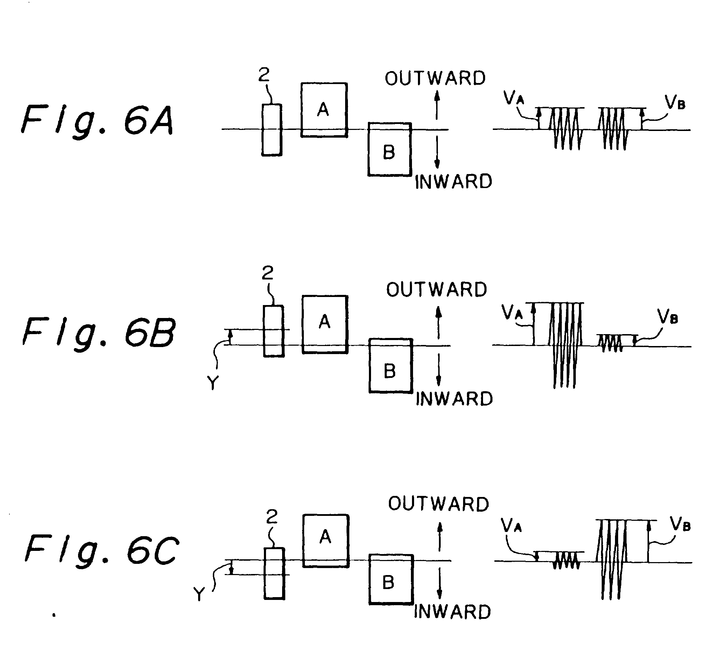

When the data head 2 is ontrack, the head evenly reads the servo information A and B as shown in Fig. 6A, to provide identical signals $V_A$ and $V_B$.

When the data head 2 is Y $\mu$m offtrack outwardly as shown in Fig. 6B, the head reads the servo information A more than the servo information B, to provide a large signal $V_A$ and a small signal $V_B$.

When the data head 2 is Y $\mu$m offtrack inwardly as shown in Fig. 6C, the head reads the servo information B more than the servo information A, to provide a large signal $V_B$ and a small signal $V_A$.

A servo control processor reads a differential signal $(V_A - V_B)$ of the signals $V_A$ and $V_B$ read by the data head 2 and determines an offset.

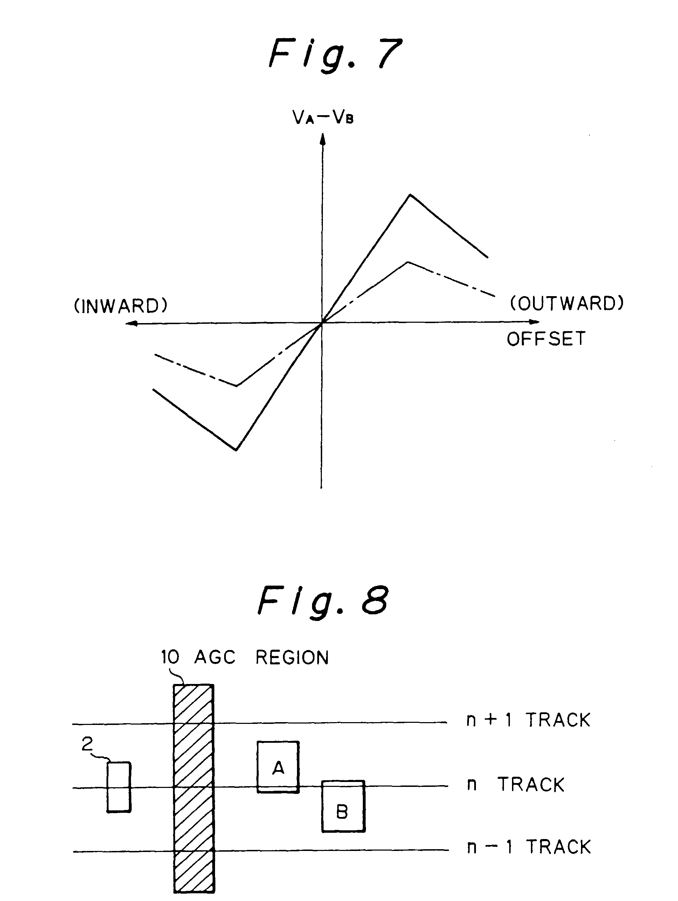

A relationship between the offset and the differential signal $(V_A - V_B)$ can be represented by a certain proportional coefficient as indicated with a continuous line in Fig. 7.

An output of the data head 2 changes depending on a floating quantity of the head (spacing between the head and the data surface), a fluctuation in a head core width, and a circumferential speed. Accordingly, the relationship between the offset and differential signal $(V_A - V_B)$ based on the servo information is not expressible with a constant proportional coefficient but differs from data head to data head. For example, some data heads exhibit poor sensitivity, i.e. a low proportional coefficient, as indicated with a dot-and-dash line in Fig. 7.

A technique that applies a constant proportional coefficient on output characteristics of every data head, therefore, cannot accurately correct an offset.

To attempt to overcome this problem it would be possible to provide an AGC region 10 disposed in front of the servo information A and B, as shown in Fig. 8.

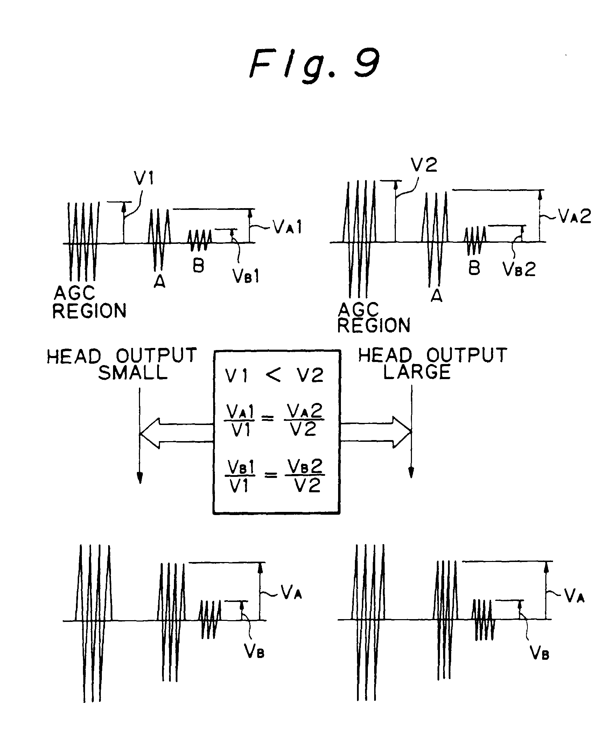

As shown in Fig. 9, an amplifier gain for providing a constant head output is determined on the basis of signals read from the AGC region 10. With this amplifier gain, signals read at the servo information regions A and B are amplified, so that a differential signal $(V_A - V_B)$ of the read signals may be constant for the same offset even if the output of the head changes.

Even with this AGC region 10, a relationship between an offset and a differential signal $(V_A - V_B)$ read on the servo information A and B does not always follow the proportional constant but fluctuates depending on fluctuations in the amplifier gain and head writing and reading divergences. Thus, the problem of inaccurate offset correction remains.

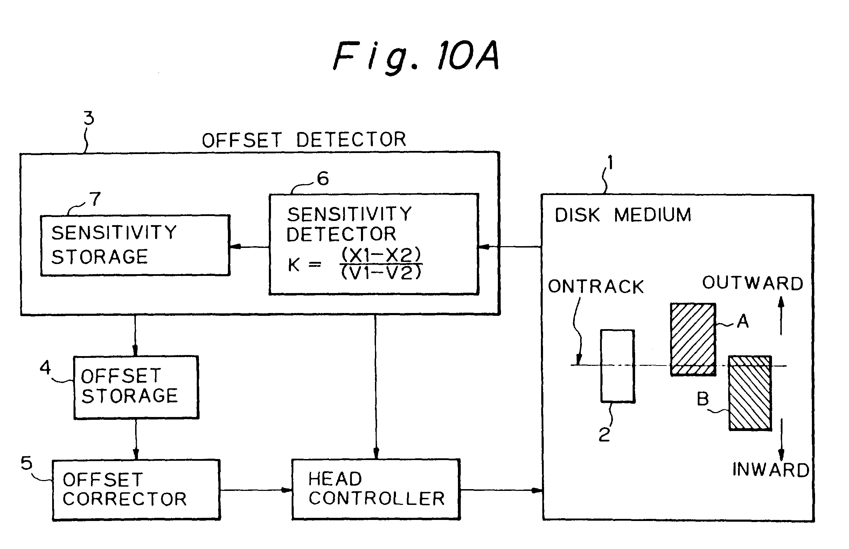

Figure 10A illustrates a magnetic disk drive unit having disk media 1 each having first servo information A recorded thereon with an outward offset of a predetermined quantity from an ontrack position and second servo information B with an inward offset of a predetermined quantity from the ontrack position; an offset detector (head offset detecting circuitry) 3 for reading signals $V_A$ and $V_B$ based on the first and second servo information A and B on one disk medium 1 with a data head 2, detecting an offset of the data head by multiplying a differential signal $(V_A - V_B)$ of the read signals by a proportional coefficient K representing an output sensitivity of the data head, and storing the offset of each data head in an offset storage 4; and an offset corrector (drive means) 5 for correcting the position of a data head 2 selected for reading or writing one disk medium 1 in a way to remove the offset of the selected data head 2 stored in the offset storage 4.

A circuit for correcting a sensitivity of servo signal detection on a data surface of such a magnetic disk unit comprises a sensitivity detector (sensitivity detection means) 6 disposed in the offset detector 3, for outwardly offsetting one data head 2 from an ontrack position by a given quantity X1, reading signals $V_A$ and $V_B$ on the first and second servo information (first and second items of predetermined servo information) A and B, and detecting a differential signal (difference signal) V1 of the read signals. The sensitivity detector 6 then inwardly offsets the data head 2 from the ontrack position by a given quantity X2, reads signals $V_A$ and $V_B$ on the first and second servo information, detects a differential signal V2 of the read signals, and computes a proportional coefficient (measure of head sensitivity) K for the data head according to the differential signals V1 and V2.

The sensitivity detector 6 computes the proportional coefficient K as follows:

$$K = (X1 - X2) / (V1 - V2)$$

where X1 denotes the outward shift X1, X2 the inward shift, V1 the differential signal value of the signals read from the first and second servo information A and B when the head is at the first reading position (having the outward shift X1), and V2 the differential signal value of the signals read from the first and second servo information A and B when the head is at the second reading position (having the inward shift X2).

The sensitivity detector 6 stores the respective proportional coefficients K of the data heads in a sensitivity storage 7.

The sensitivity detector 6 detects a proportional coefficient K for one data head 2 at first, reads signals on the first and second servo information A and B with the data head 2 at the ontrack position, obtains a differential signal $(V_A - V_B)$, computes an offset of the data head by multiplying the differential signal $(V_A - V_B)$ by the proportional coefficient K, and stores the offset in the offset storage 4.

In the Fig. 10A unit, a data head 2 whose offset is to be detected is controlled to an ontrack position (assumed ontrack position) according to servo information read out of a servo disk, and then the data head is moved for offset detection.

The sensitivity correcting circuit for use in servo signal detection on a data surface in the magnetic disk unit forcibly shifts a head position at least two times for every data head to obtain differential signals V1 and V2 of signals read on the servo information A and B, and finds an offset of the data head by making use of a proportional coefficient (measure of sensitivity) obtained from actual outputs of the data head. Accordingly, it is possible to establish a proportional coefficient (sensitivity measure) specific to each data head even if the output of the data head fluctuates, and correctly detect an offset of the data head. Thereafter, the offset is corrected and the data head is accurately placed on a track for reading or writing the track even if there is a change in ambient temperature.

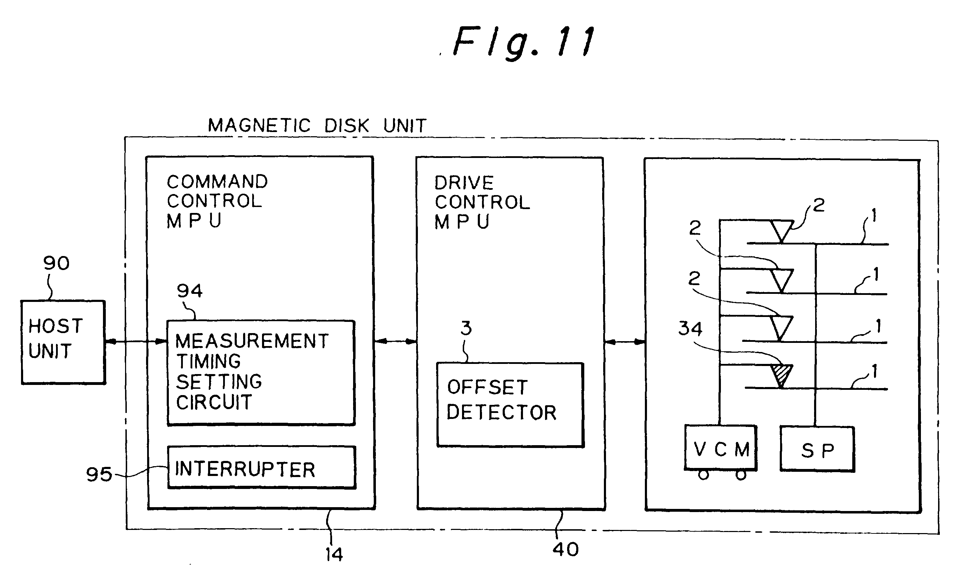

The magnetic disk unit of Fig. 11 has a command control microprocessor unit (MPU) 14 for decoding a command provided by a host unit 90 and generating an internal command, and a drive control MPU 40 for carrying out head positioning control on disk media 1 according to the internal command provided by the command control MPU 14.

An offset measuring circuit of the Fig. 11 magnetic disk drive unit comprises the offset detector of Fig. 10A for detecting offsets of data heads 2 relative to a servo head 34 according to servo information read by the data heads 2 on data surfaces of the disk media 1; a measurement timing setting circuit 94 for instructing the offset detector 3 to start an offset detection process according to a predetermined time schedule; and an interrupter 95 which serves, if the command control MPU 14 decodes a read or write command provided by the host unit 90, to interrupt the offset detection process, to execute the higher command first, and to resume the offset detection process after the higher command is completed.

The offset detector 3 carries out the offset detection process on the data heads 2 in predetermined order, and when receiving an interrupt instruction from the interrupter 95, interrupts the process after detecting an offset of the data head presently being measured.

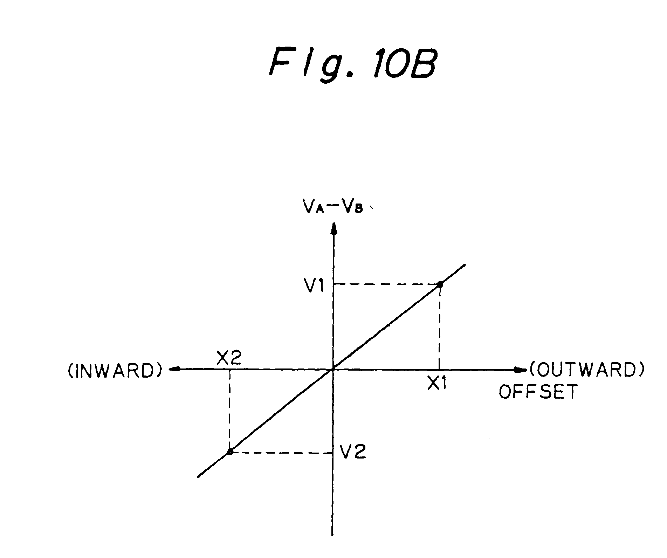

As explained above with reference to Figs. 10A and 10B the offset detector 3 obtains a differential signal ($V_A$ - $V_B$) of signals read on first and second servo information pieces A and B that are offset in different directions by a predetermined quantity from a track center read by one data head 2 on a data surface, multiplies the differential signal ($V_A$ - $V_B$) by the head's proportional coefficient (sensitivity measure) K, and detects an offset of the data head.

The measurement timing setting circuit 94 provides measurement timing at intervals depending on changes in ambient temperature just after a power source of the unit is turned ON.

The interrupter 95 resumes the interrupted offset detection process, provided that the host unit 90 does not issue a command for a predetermined continuous time.

The offset measuring circuit carries out the offset measurement (offset detection process) in the magnetic disk unit according to a predetermined time schedule. If the host unit provides a write or read command during the offset measurement, the system interrupts the offset measurement, positions a head through a seek operation according to the higher command, and executes the write or read command with a priority.

Accordingly, the circuitry of Fig. 11 minimizes a wait time of execution of the higher command due to the offset measurement, to thereby improve the throughput and performance of the unit without deteriorating the offset measuring function.

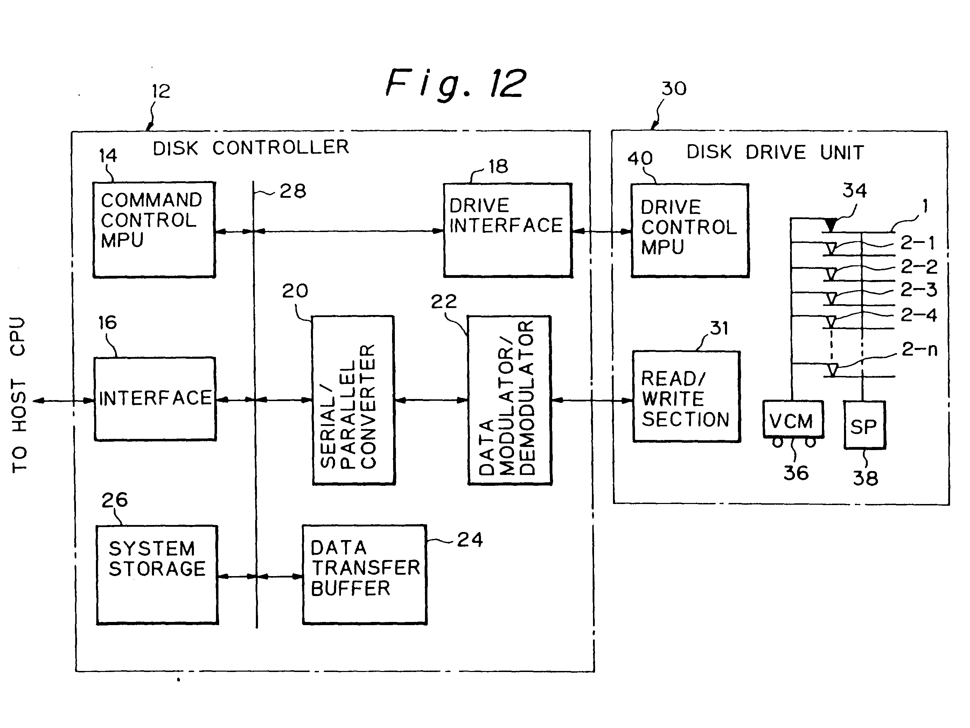

Figure 12 is a general schematic view showing a magnetic disk unit embodying the the present invention.

In Fig. 12, the magnetic disk unit generally comprises a disk controller 12 and a disk drive unit 30.

The disk controller 12 incorporates a command control MPU 14 for carrying out centralized control.

In this embodiment, the command control microprocessor 14 is employed to perform the function of the measurement timing setting circuit 94 shown in the schematic view of Fig. 11, for providing an instruction to start offset detection according to a predetermined time schedule, and the function of the interrupter 95 for interrupting the offset detection if a read or write command from a host unit is decoded during the offset detection, executing the command first, and resuming the offset detection after the completion of the command.

The function of the measurement timing setting circuit 94 may alternatively be realised in the disk drive unit 30.

The command control MPU 14 is connected, through an internal bus 28, to a higher interface 16, a drive interface 18 to the disk drive unit 30, a serial/parallel converter 20, a data transfer buffer 24, and a system storage 26.

The drive interface 18 transfers control commands from the command control MPU 14 to the disk drive unit 30.

The serial/parallel converter 20 transfers write or read data to and from the disk drive unit 30 through a data modulator/demodulator 22.

The serial/parallel converter 20 and data modulator/demodulator 22 usually form a VFO (variable frequency oscillator) section.

Write or read data is initially stored in the data transfer buffer 24 and then transferred to the disk drive unit 30 or a host CPU.

The disk drive unit 30 has a drive control MPU 40 and READ/WRITE section 31. A spindle motor (SP) 38 rotates a plurality of magnetic disks 1 serving as storage media at a constant speed. Heads are arranged for the magnetic disks 1 and moved across tracks of the disks 1 by a voice coil motor (VCM) 36.

A top one of the heads is a servo head 34, and the remaining ones are data heads 2 which are referred 2-1 to 2-n in detail.

The servo head 34 reads a servo disk among the magnetic disks 1. Servo information is recorded at all cylinder positions (all tracks) on a servo surface of the servo disk).

The data heads 2-1 to 2-n write or read data disks among the magnetic disks 1.

The servo information is recorded sector by sector on each data surface. Namely, as shown in Fig. 3, first servo information A for a certain frequency signal, for example, a maximum write frequency signal is recorded a position X $\mu$m outwardly shifted from an ontrack position of the data head 2 on a specific track on a data surface of a magnetic disk, and second servo information B is recorded at a position X $\mu$m inwardly shifted from the ontrack position.

As shown in Fig. 4, the servo information may be recorded on a specific track 9 on a data surface 8, or as shown in Fig. 5, in a vacant space of every sector on a data surface 8.

When the data head 2 is truly ontrack (on its intended tracking line) the head evenly reads the servo information A and B as shown in Fig. 6A, to provide identical signals $V_A$ and $V_B$.

When the data head 2 is outwardly offtrack as shown in Fig. 6B, the head reads the servo information A more than the servo information B, to provide a large signal $V_A$ and a small signal $V_B$.

When the data head 2 is inwardly offtrack as shown in Fig. 6C, the head reads the servo information B more than the servo information A, to provide a large signal $V_B$ and a small signal $V_A$.

The drive control microprocessor 40 disposed in the disk drive unit 30 reads a differential signal ($V_A$ - $V_B$) of signals $V_A$ and $V_B$ read by the data head 2 during the offset measurement, and detects an offset.

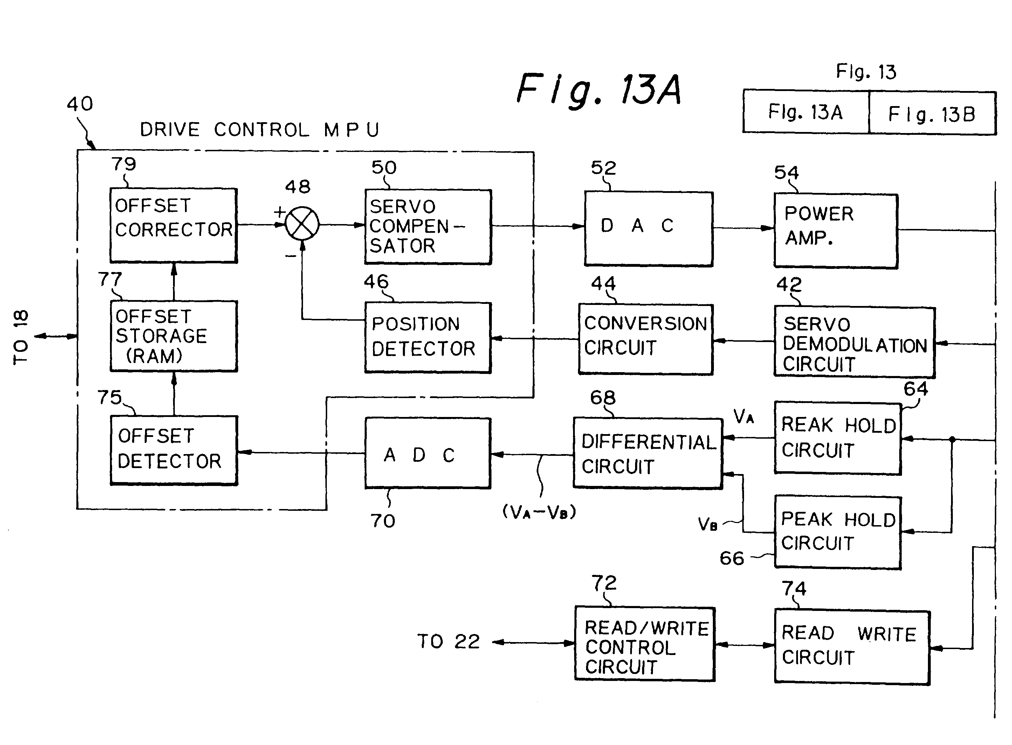

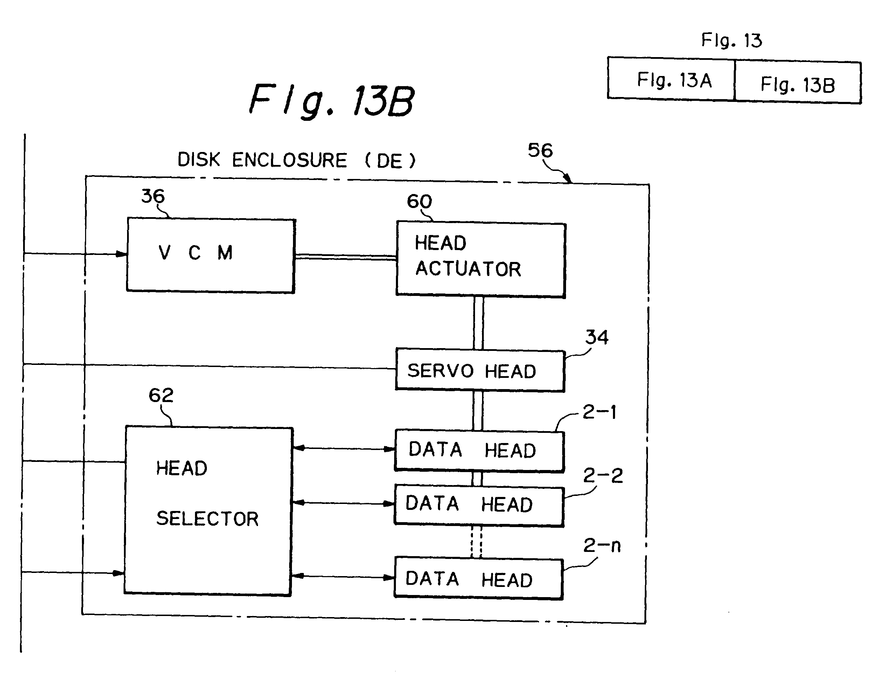

Fig. 7 shows the proportional relationship between the offset and the differential signal $(V_A - V_B)$. The coefficient of proportionality K, represented by the slope in Fig. 7, is measured by sensitivity detection means included in the offset detector 75 (Fig. 13A) which corresponds to the offset detector 3 in Fig. 10A.

Accordingly, an offset $\alpha$ can be calculated by multiplying a differential signal $(V_A - V_B)$ of signals read on the servo information A and B on a data surface by the proportional coefficient (sensitivity measure) K.

Namely, an offset $\alpha$ for the servo information on a data surface is calculated as follows:

$$\alpha = K \cdot (V_A - V_B).$$

Figure 13, which comprises Fig. 13A and Fig. 13B, is a schematic view showing the disk drive unit 30 of the embodiment of Fig. 12.

In Fig. 13, the disk drive unit 30 has a microprocessor (MPU) 40 serving as a main control section.

A disk enclosure (DE) 56 has a head actuator 60 driven by the voice coil motor 36. The head actuator 60 is connected to the servo head 34 and data heads 2-1 to 2-n.

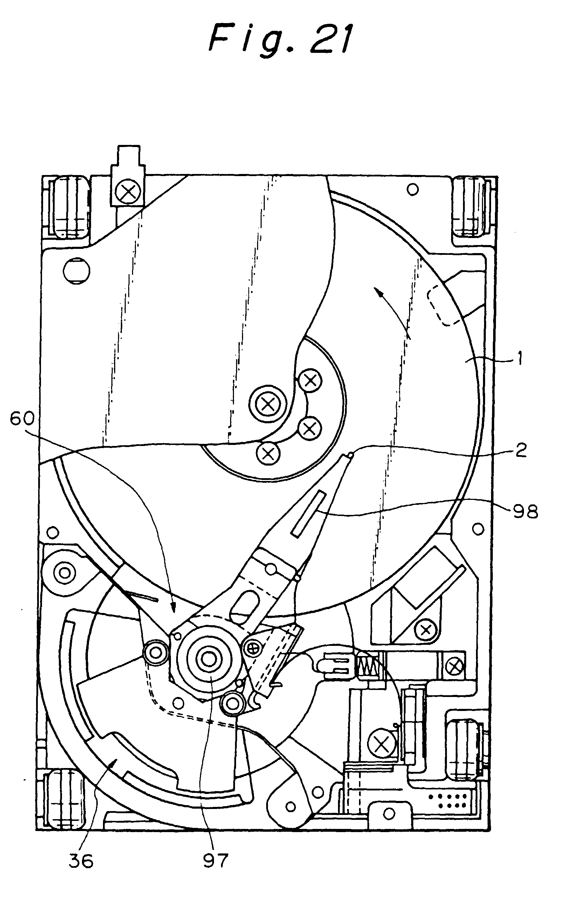

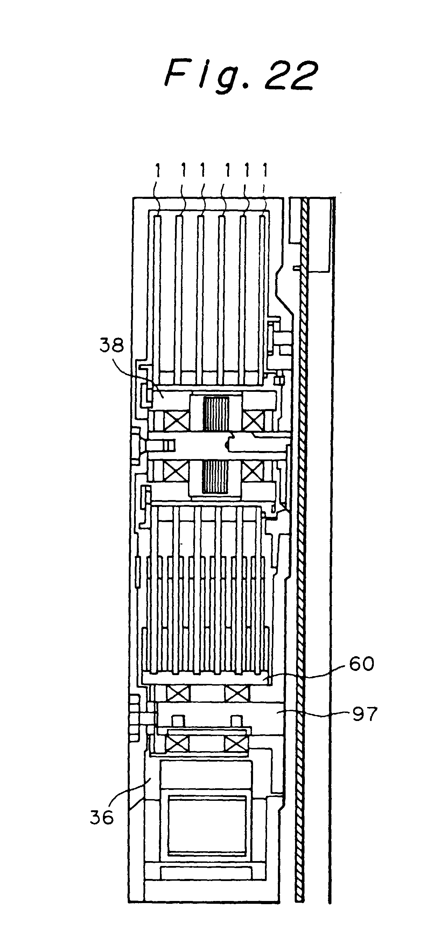

Figure 21 and Fig. 22 are respective sectional plan and side views of the disk enclosure fitted in the magnetic disk unit. In the figure, 97 is an axis and 98 is an arm.

A servo signal read by the servo head 34 is demodulated by a servo demodulation circuit 42 into two positional signals POSN and POSQ, which are applied to a conversion circuit 44.

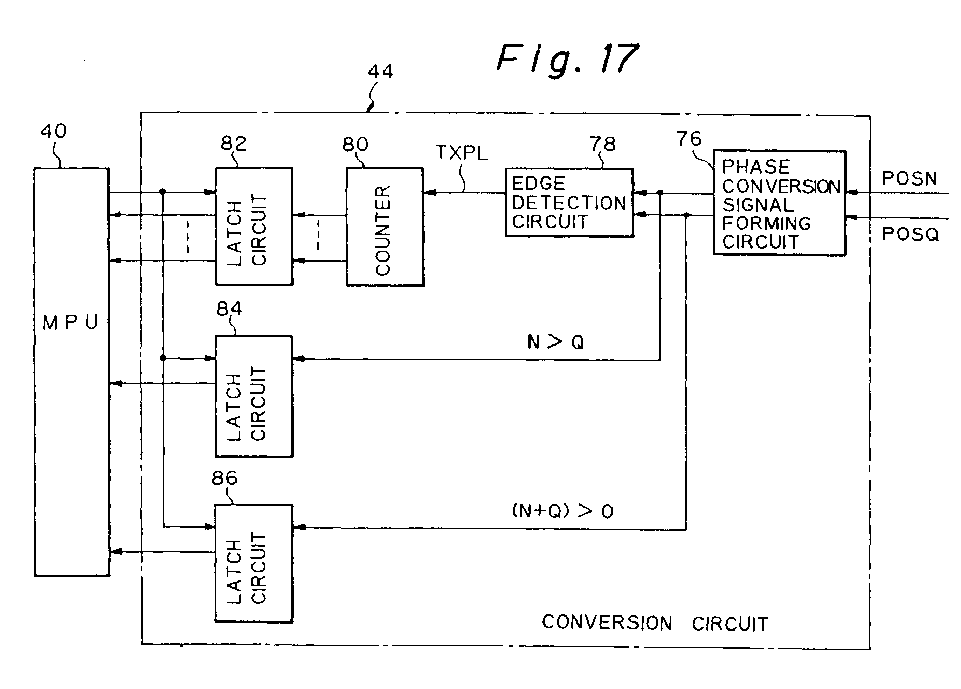

Figure 17 is a block diagram showing an example of the conversion circuit 44 of Fig. 13.

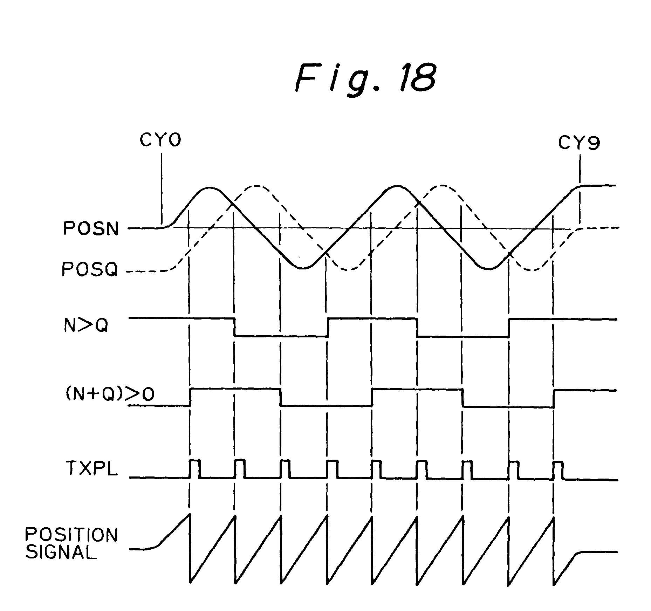

In Fig. 17, the conversion circuit 44 has a phase conversion signal forming circuit 76 for forming signals (N > Q) and {(N + Q) > 0} shown in Fig. 18 according to the positional signals POSN and POSQ provided by the servo demodulation circuit 42.

The two output signals from the phase conversion signal forming circuit 76 are provided to an edge detection circuit 78, which detects edges of the two signals to provide a track crossing pulse TXPL shown in Fig. 18.

The track crossing pulse TXPL from the edge detection circuit 78 is counted by a counter circuit 80 to find the number of tracks crossed by a corresponding head. In Figure 18, CY denotes a cylinder.

A signal from the counter 80 and the two output signals from the phase conversion signal forming circuit 76 are provided to latch circuits 82, 84, 86, respectively.

The latch circuits 82, 84 and 86 receive a common latch control signal from the microprocessor 40, and simultaneously latch the three signals. Thereafter, the microprocessor 40 sequentially reads the latched data.

In this way, the three latch circuits 82, 84 and 86 simultaneously latch the output signals of the counter circuit 80 and phase conversion signal forming circuit 76, and the microprocessor 40 sequentially reads the latched signals. When the microprocessor 40 alternately carries out head position control and higher command execution according to timed interrupts, the head position control may be interrupted because of the time-out required to execute a higher command. Thereafter, the head position control may be resumed. In this case, there is a time lag. Even with such a time lag, it is possible to correctly continue the head position control, with no adverse effects due to the time lag, using the simultaneously latched data.

The signals (latched data) from the conversion circuit 44 are read by a position detector 46 of the microprocessor 40, to generate positional data (positional signal) that linearly changes for each track as shown in Fig. 18.

It is naturally possible to detect a head speed according to a period of the track crossing pulse TXPL provided by the conversion circuit 44.

The microprocessor 40 has a servo processing section that is realised by program control and includes the position detector 46, an add point 48, and a servo compensator 50.

The position detector 46 carries out speed control for a seek operation and position control for an ontrack operation.

Namely, it moves a head to a target track through the seek operation by feedback control of a target speed and a head moving speed. Once the head reaches the target track through the seek operation, it switches the speed control to the position control to put the head on an ontrack position.

For ontrack control on the target track, which is carried out after a seek operation, the servo compensator 50 provides position control data for the voice coil motor 36 so that the positional signals (Fig. 18) from the position detector 46 may always indicate the center of the track. The servo compensator 50 has a function of increasing the high frequency gain of a servo signal to compensate for an advanced phase.

The position control data from the microprocessor 40 is converted by a DA converter 52 into an analog voltage whose power is amplified by a power amplifier 54 to drive the voice coil motor 36.

The microprocessor 40 has an offset detector 75, and offset storage 77, and an offset corrector 79.

The offset detector 75, which corresponds to the offset detector 3 in Fig. 10A, carries out an offset detection process after a power source of the magnetic disk unit is turned ON, according to an interrupt carried out according to a predetermined time sequence. For example, the offset detector 75 carries out an offset detection process whenever it receives an internal command to start a measurement from the command control microprocessor 14 of Fig. 12 after a power source of the magnetic disk unit is turned ON.

The offset detection process is carried out at short intervals of, for example, one minute just after the power source is turned ON with ambient temperature changing widely, ten minutes some time after that, and at long intervals of, for example, one hour after the temperature is stabilized and saturated.

The offset detector 75 receives a differential signal $(V_A - V_B)$ based on signals read by one of the data heads 2-1 to 2-n.

The data heads 2-1 to 2-n are connected to a head selector 62, which provides, in response to a selection signal from the microprocessor 40 designating which head is to be used in the current offset detection operation, signals read by the designated data head to peak hold circuits 64 and 66. The heads are designated sequentially in the offset detection process, so that an offset detection operation is performed on each of the data heads 2-1 to 2-n in turn.

The peak hold circuit 64 holds, according to timing controlled by the microprocessor 40, a peak value $V_A$ of a signal read on the first servo information A recorded on a data surface.

The peak hold circuit 66 holds, according to timing controlled by the microprocessor 40, a peak value $V_B$ of a signal read on the second servo information B is recorded on the data surface.

A differential circuit 68 provides a differential signal $(V_A - V_B)$ of the output signals of the peak hold circuits 64 and 66. The differential signal $(V_A - V_B)$ is converted by an AD converter 70 into digital data, which is read by the offset detector 75 of the drive control microprocessor 40.

The offset detector 75 includes sensitivity detection means which compute the proportional coefficient (sensitivity measure) K having the characteristics shown in Fig. 7, and calculates an offset $\alpha$, for each of the data heads 2-1 to 2-n, if it is a thermal offset. The offsets obtained are stored in the offset storage 77 that is a RAM.

If it is an external force offset, a specific data head, for example the data head 2-1, is selected, and an offset is detected on every predetermined number of cylinders. The offsets obtained are stored in the offset storage 77. It is naturally possible to detect offsets on all cylinders, calculate an average offset for every predetermined number of cylinders, and store the average offsets in the storage.

A data writing or reading operation with the data heads 2-1 to 2-n is carried out through a read/write control circuit 72 and a read/write circuit 74. At this time, the head selector 62 is controlled by the microprocessor 40 to let a specific data head read or write data.

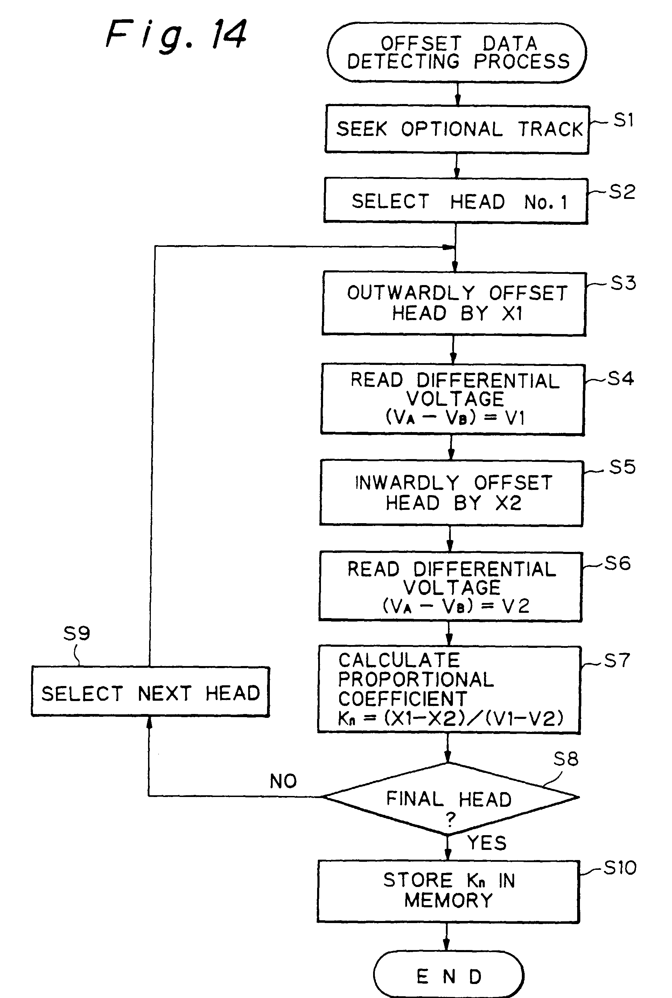

Figure 14 is a flowchart showing an offset data detection process carried out by the offset detector 75 in Fig. 13.

The interrupt carried out according to the time schedule after the power source is turned ON starts the offset detection process of Fig. 14.

Step S1 causes a head to seek a predetermined track position (or cylinder position). When servo information is arranged on a data surface as shown in Fig.

4, the head moves to the specific track 9 on which the servo information is recorded. When the servo information is recorded in a vacant space of a sector as shown in Fig. 5, the head moves to an optional track position. After the head moves to the track position through the seek operation, the head is controlled to an ontrack position according to servo information provided by the servo head 34.

Step S2 selects the data head 2-1 as a No. 1 head.

In this embodiment, it is supposed that there are six magnetic disks 1. Both sides of each disk have a recording surface. Accordingly, there is one servo head 34 and there are 11 data heads 2-1 to 2-n. Namely, there are 11 data heads, Nos. 1 to 11.

Step S3 forcibly shifts the data head outwardly from the ontrack position by a fixed quantity of X1 μm. Then, Step S4 reads a differential signal $V1 = (V_A - V_B)$ of signals read on the servo information A and B.

Step S5 forcibly shifts the data head inwardly from the ontrack position by a fixed quantity of X2 μm. Then, Step S6 reads a differential signal $V2 = (V_A - V_B)$ of signals read on the servo information A and B.

Step S7 computes a proportional coefficient K1 indicating an output sensitivity of the No. 1 head as follows:

$$K1 = (X1 - X2) / (V1 - V2)$$

and temporarily stores the same in a system storage, etc.

Step S8 checks to see whether or not the head is the last one. If it is not the last head, Step S9 switches the head to the next one, and the process returns to Step S3. Steps S3 to S7 are repeated to detect proportional coefficients Kn.

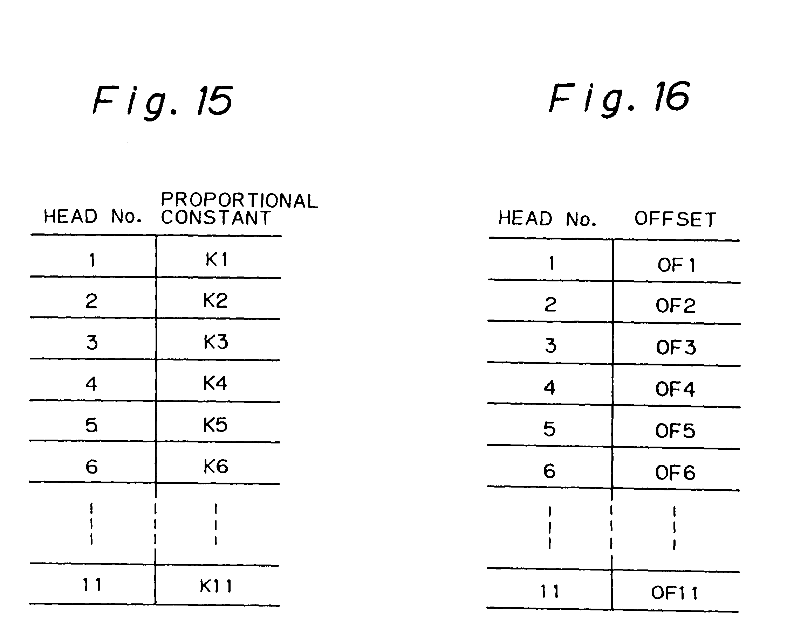

When Step S8 detects the last head, Step S10 stores the computed proportional coefficients K1 to K11 of the heads No. 1 to No. 11 in the offset storage 77, as shown in Fig. 15.

Thereafter, each of the data heads 2-1 to 2-11 provides, on the ontrack position, a differential signal $(V_A - V_B)$ from signals read on the servo information. The differential signals are multiplied by the already detected proportional coefficients K1 to K11 shown in Fig. 15, respectively, to provide offsets (distance measures) OF1 through OF11. The offsets OF1 through OF11 of the respective heads are stored in the offset storage 77 as shown in Fig. 16.

Once the offsets of the respective heads are stored as shown in Fig. 16, it is not particularly necessary to preserve the proportional coefficients of the respective heads shown in Fig. 15.

Referring again to Fig. 13, the offset storage 77 stores the offsets shown in Fig. 16 that have been obtained from the proportional coefficients of Fig. 15. When one of the selected data heads performs a seek operation according to a write or read instruction from the higher disk controller 12, one of the offsets corresponding to the selected data head is read out of the offset storage 77, and a correction signal for moving the head in a way to remove the offset is provided from the offset corrector 79 to the add point 48, which adds the correction signal to positional data that is based on servo information provided by the servo head 34, thereby completing the offset correction.

Even if any data surface deviates from the servo surface due to a change in ambient temperature, a corresponding data head can be correctly controlled to an ontrack position after the completion of the seek operation.

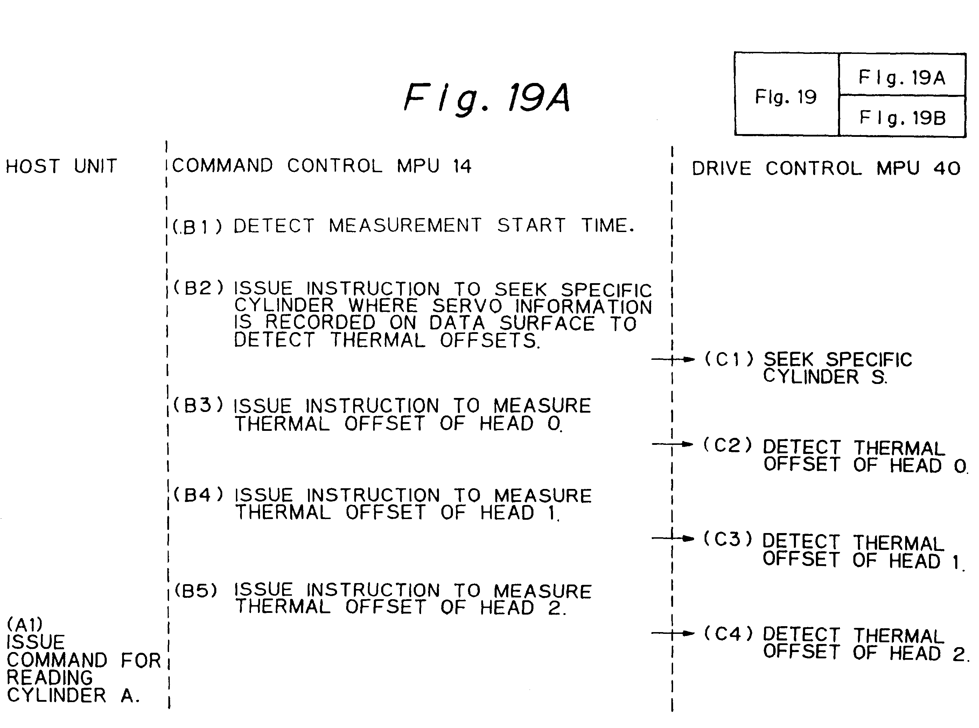

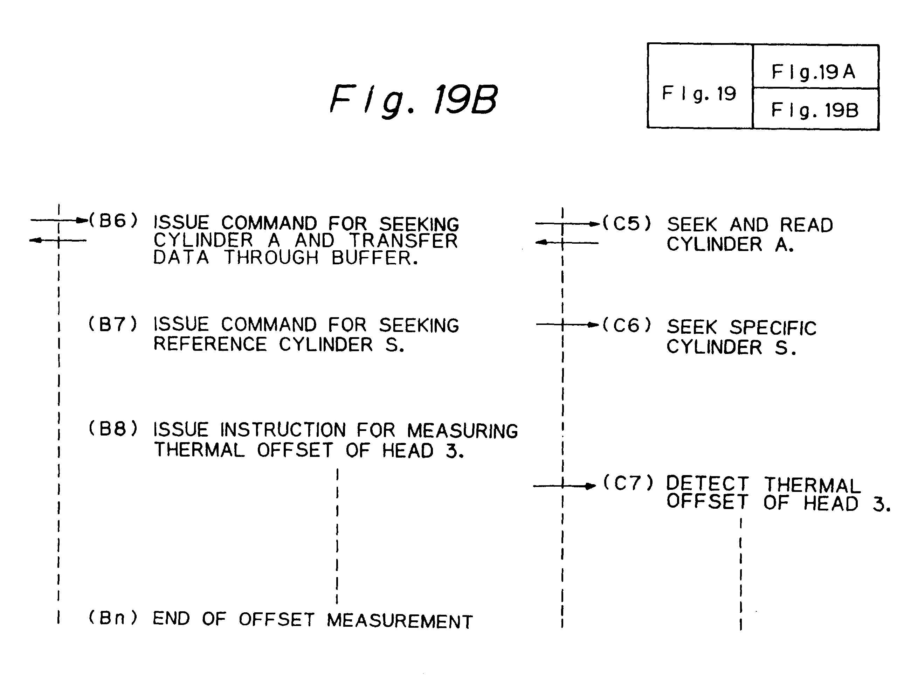

Another example of an offset detection process carried out by the offset detector 75 of the drive control microprocessor 40 of Fig. 13 will be explained with reference to a time chart of Figs. 19A and 19B. In Figs. 19A and 19B, thermal offsets are measured as an example.

When B1 of the command control microprocessor 14 detects measurement start time, B2 issues to the drive control microprocessor 40 a seek instruction as an internal instruction for seeking a specific cylinder S on which a thermal offset is to be detected.

Upon receiving the instruction, C1 of the drive control microprocessor 40 moves the heads onto the specific cylinder.

B3 of the command control microprocessor 14 provides an internal command to cause the drive control microprocessor 40 measure a thermal offset of a head 0.

Upon receiving the instruction, C2 of the drive control microprocessor 40 detects the thermal offset of the head 0. Namely, the microprocessor 40 selects the data head 0, reads signals $V_A$ and $V_B$ on the servo information A and B on the data surface with the selected data head, obtains a differential signal ($V_A - V_B$) of the read signals $V_A$ and $V_B$, and calculates an offset $\alpha$ by multiplying the differential signal by the appropriate proportional coefficient (sensitivity measure) K.

B4 and B5 sequentially provide offset measuring instructions for heads 1 and 2, and C3 and C4 measure the offsets.

During the offset detection in C4 according to the offset measuring instruction for the head 2 provided by B5, A1 of the host unit 90 issues a read command for a cylinder A.

Upon receiving this read command, the command control microprocessor 14 waits for the completion of the offset detection of C4 for the head 2, and issues a seek command for the cylinder A in B6 according to the higher command. Then, C5 seeks the cylinder A. Namely, the offset measurement (offset detection process) is interrupted at C5.

When the cylinder A is sought and the heads are ontrack there, data is read and transferred to the host unit 90 through a buffer.

When the higher read command is completed, B7 issues a seek command for the specific cylinder S, and C6 seeks the specific cylinder S. Then, to resume the interrupted offset measurement (offset detection process), B8 issues an offset measuring instruction for the next head 3, and C7 detects an offset of the head 3.

The offset detection is repeated up to the last head n. Bn completes a series of the offset measurements, and a normal process is resumed.

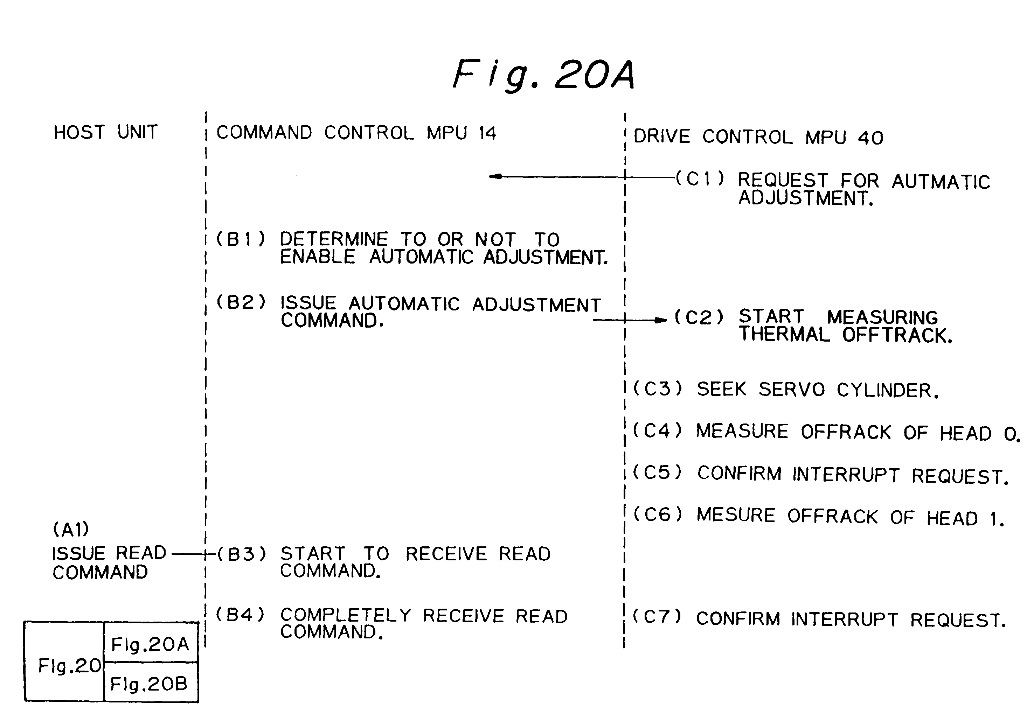

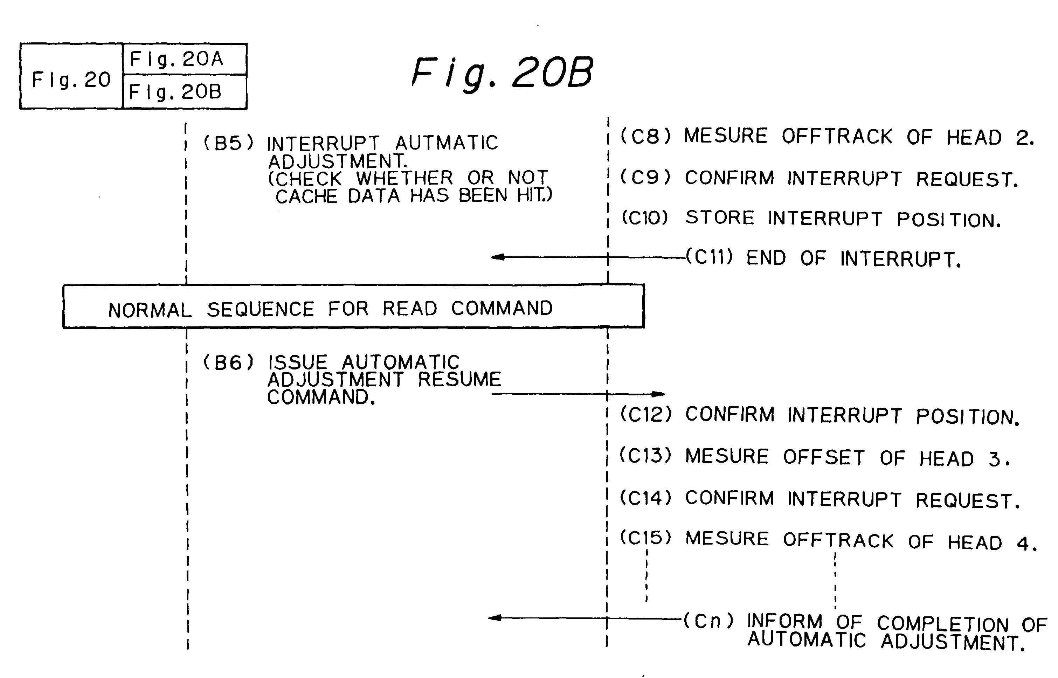

Figures 20A and 20B is a time chart showing an alternative offset detecting process which circuitry embodying the invention can perform. This process also measures thermal offsets as an example. In the figure, "automatic adjustment" means the offset detecting. process.

In the process of Figs. 20A and 20B, the drive control microprocessor 40 sets measurement timing and starts an interrupt process for a higher command after receiving an instruction from the command control microprocessor 14.

Unlike in the process of Figs. 19A and 19B, the drive control microprocessor 40 of this embodiment has an intelligent function for offset measurement.

In B1 to B6 and C1 to Cn, the command control microprocessor 14 and drive control microprocessor 40 send and receive internal commands to detect offsets, interrupt the offset detection process upon receiving a higher command, and resume the offset detection process upon the completion of the higher command.

In another embodiment of the invention, resumption of the offset measurement in B7 of Figs. 19A and 19B and B6 of Figs. 20A and 20B may be achieved only when the host unit 90 does not issue a command for at least a predetermined time after the completion of the preceding higher command.

If the host unit 90 issues commands at random temporal positions, the offset measurement may be resumed upon the completion of a presently processed higher command with no problem. If the host unit sequentially issues write or read commands, however, the higher commands and the offset measurement will be alternately carried out, resulting in deterioration of the sequential access efficiency.

Accordingly, the offset measurement is only resumed if no higher command is issued a predetermined time, for example 1 ms, after the completion of the present higher command.

Namely, the offset measurement will not be resumed after the end of each higher command if it is a sequential access, thereby preventing a deterioration in processing performance of the sequential access.

The numbers of magnetic disks and heads in the above embodiments are only example, and they will be determined in practice in accordance with the particular requirements of each data processing installation.

In the above embodiments, the servo surface is formed on an end one of a plurality of disks. The servo surface may be formed on a centre disk or on any other disk.

A magnetic disk drive unit embodying the present invention includes circuitry which corrects an offset of the head according to servo information recorded on a data surface.

As explained above, irrespective of fluctuations in the outputs of data heads, circuitry embodying the invention can forcibly offset each data head, actually read signals through each data head, and according to the read signals, obtain proportional coefficients that are representative of the sensitivities of the data heads. Thereafter, such circuitry correctly detects data head offsets, i.e., deviations between a servo surface and data surfaces caused by a change in ambient temperature. Such circuitry thus accurately carries out a write or read offset correction to realize precise ontrack control.

As also explained above, the head offset detecting circuitry can preferably interrupt offset measurement upon receiving a higher command during the measurement, and execute the higher command first, thereby preventing a deterioration of processing performance due to the offset measurement.

**Claims**

1.  A magnetic disk drive unit including:

    a magnetic disk (1) having a data storage surface whereon there are predetermined tracks for storing data applied to the unit and for storing, at a preselected location along one of those tracks, predetermined servo information comprising a first item of information (A) offset to a predetermined extent (X) to one side of an intended tracking line and a second item of information (B) offset to a predetermined extent (X) to the opposite side of the said intended tracking line;
    a read/write head (2) arranged in opposition to the said data storage surface, and movable thereover between the said data tracks, for reading data from that surface or writing data thereon;
    head offset detecting circuitry (3,6) connected with the said read/write head (2) for processing signals ($V_A, V_B$) derived respectively from the said first and second items of information (A,B) to produce a difference signal ($V_A$-$V_B$) that is employed to derive a measure (OF) of the distance by which the read/write head is offset from the said intended tracking line; and
    drive means (5) arranged and connected for moving the said read/write head (2), in dependence upon the distance measure (OF) derived from the said difference signal ($V_A$-$V_B$), so as to reduce the said distance by which the said read/write head is offset from the said intended tracking line;

    characterised in that the head offset detecting circuitry includes sensitivity detection means (6) operable in a self-calibration mode of the circuitry to cause the said read/write head (2) to be displaced parallel to the data storage surface and laterally with respect to the said one track from a first reading position to a second reading position separated from the first reading position, in a direction transverse to the said tracking line at the said preselected location, by a predetermined calibration distance ($X_1$-$X_2$), and to determine the respective values ($V_1, V_2$) of the said difference signal ($V_A, V_B$) at the said first and second reading positions and to employ the ratio of the said predetermined calibration distance ($X_1$-$X_2$) to the difference ($V_1$-$V_2$) between the said respective values to provide a measure (K) of sensitivity of the read/write head;

    and in that the said distance measure (OF) is derived from the said difference signal ($V_A$-$V_B$) in dependence upon that measure (K) of head sensitivity.

2.  A magnetic disk drive unit as claimed in claim 1, wherein the said first reading position is offset to the said one side of the said intended tracking line and the said second reading position is offset to the said opposite side of that line.

3.  A magnetic disk drive unit as claimed in claim 1 or 2, having a plurality of such data storage surfaces, on each of which there are predetermined tracks for storing data applied to the unit and for storing, at a preselected location along one of those tracks, predetermined servo information comprising a first item of information (A) offset to a predetermined extent (X) to one side of an intended tracking line and a second item of information (B) offset to a predetermined extent (X) to the opposite side of the said intended tracking line; and also having a plurality of such read/write heads (2) arranged respectively in opposition to the said data storage surfaces, and movable thereover between the said data tracks, for reading data from the surface concerned or writing data thereon;

    wherein the said head offset detecting circuitry (3, 6) is operable, when in its said self-calibration mode, to perform an offset detection operation on a designated one of the read/write heads (2) of the said plurality, in which operation the sensitivity detection means (6) cause the designated read/write head (2) to be displaced parallel to its opposed data storage surface and laterally with respect to the said one track of that surface from a first reading position to a second reading position separated from the first reading position, in a direction transverse to the said tracking line at the said preselected location on that surface, by a predetermined calibration distance (X1-X2), and determine the respective values (V1,V2) of the said difference signal ($V_A$, $V_B$) at the said first and second reading positions and employ the ratio of the said predetermined calibration distance (X1-X2) to the difference (V1-V2) between the said respective values to provide such a measure (K) of sensitivity of the designated read/write head, whereafter such a distance measure (OF) for the designated read/write head is derived by multiplying the difference signal value by the said sensitivity measure (K) for the designated head;

the unit further including offset storage means (4) for storing the distance measure (OF) for each head of the said plurality; and

the said drive means (5) being operable, when one of the read/write heads (2) of the said plurality upon which such an offset detection operation has been performed is selected for reading or writing, to move the selected head, in dependence upon the stored distance measure (OF) for that head, so as to reduce the said distance by which the head concerned is offset from its said intended tracking line during such reading or writing.

4. A magnetic disk drive unit as claimed in any preceding claim, wherein the said distance measure (OF) for the or each read/write head (2) is derived from the value of the said difference signal ($V_A$-$V_B$) produced when the said read/write head concerned is controlled by the said drive means (5) to be at an assumed ontrack position based on servo information derived from a servo disk of the magnetic disk drive unit.

5. A magnetic disk drive unit as claimed in claim 4 when read as appended to claim 3, wherein, when the head offset detecting circuitry (3,6) is in its said self-calibration mode, the said sensitivity detection means (6) firstly determine the said sensitivity measure (K) for the read/write head (2) concerned, whereafter the head offset detecting circuitry (3) processes signals derived respectively from the first and second items of information (A,B) with the read/write head concerned at the said assumed ontrack position, produces such a difference signal value (VA-VB) based on the difference in the respective peak values of the derived signals, computes the said distance measure (OF) for the head concerned by multiplying that difference signal value by the sensitivity measure (K) for the head, and stores that distance measure (OF) in the said offset storage means (4).

6. A magnetic disk drive unit as claimed in any preceding claim, wherein the said sensitivity detection means (6) make the said sensitivity measure (K) equal to the said ratio of the said predetermined calibration distance (X1-X2) to the said difference (V1-V2) between the respective values of the said difference signal ($V_A$-$V_B$) at the said first and second reading positions.

7. A magnetic disk drive unit as claimed in any preceding claim, wherein the said sensitivity detection means (6) are operable to store the said sensitivity measure (K) of the or each read/write head in a sensitivity storage section (7) of the disk drive unit.

8. A magnetic disk drive unit as claimed in claim 3, further comprising control means (14) for controlling operation of the unit;

wherein the said head offset detecting circuitry (3,6) is operable, in response to a predetermined control signal applied to the circuitry, to initiate an offset detection process in which each of the read/write heads (2) of the said plurality is designated in turn and such an offset detection operation is performed thereon; and the circuitry is such that if, during the course of the said offset detection process, the said control means (14) receives a command calling for a preselected operation, of a type different from the said offset detection process, execution of that process is suspended upon production of the said distance measure (OFx) for the head being dealt with when the command is received, whereafter the said preselected operation is executed, the said offset detection process being resumed after completion of execution of that operation.

**Patentansprüche**

1. Magnetplatten-Treibereinheit, mit:

einer Magnetplatte (1) mit einer Datenspeicherfläche, auf der vorbestimmte Spuren zum Speichern von Daten vorgesehen sind, die der Einheit zugeführt werden und um bei einer vorgewählten Stelle entlang einer dieser Spuren vorbestimmte Servoinformationen zu speichern, die einen ersten Informationspunkt (A) umfassen, der bis zu einem vorbestimmten Ausmaß (X) zu einer Seite einer beabsichtigten Spurverfolgungslinie versetzt ist, und einen zweiten Informationspunkt (B), der in einem vorbestimmten Ausmaß (X) zu der entgegengesetzten Seite der beabsichtigten Spurverfolgungslinie versetzt ist;

einem Lese-/Schreibkopf (2), der in Gegenüberlage zu der Datenspeicherfläche angeordnet ist und über derselben zwischen den Datenspuren bewegbar ist, um Daten von dieser Fläche zu lesen oder Daten in diese einzuschreiben;

einer Kopfversatz-Detektorschaltungsanordnung (3, 6), die an den Lese-/Schreibkopf (2) angeschlossen ist, um die Signale ($V_A$, $V_B$) zu verarbeiten, welche jeweils von dem ersten und dem zweiten Informationspunkt (A, B) abgeleitet wurden, um ein Differenzsignal ($V_A$ - $V_B$) zu erzeugen, welches dazu verwendet wird, um eine Meßgröße (OF) des Abstandes abzuleiten, um welchen der Lese-/Schreibkopf von der beabsichtigten Spurverfolgungslinie versetzt ist; und

einer Treibereinrichtung (5), die so angeordnet und angeschlossen ist, um den Lese-/Schreibkopf (2) in Abhängigkeit von der Abstandsmeßgröße (OF), die aus dem Differenzsignal ($V_A$ - $V_B$) abgeleitet wurde, so zu bewegen, daß der Abstand reduziert wird, um den der Lese-/Schreibkopf von der beabsichtigten Spurverfolgungslinie versetzt ist;

dadurch **gekennzeichnet,** daß die Kopf-Versatz-Detektorschaltungsanordnung eine Empfindlichkeits-Detektoreinrichtung (6) enthält, die in einem Selbst-Eich-Modus der Schaltungsanordnung betreibbar ist, um den Lese-/Schreibkopf (2) zu veranlassen, parallel zu der Datenspeicherfläche und seitlich in bezug auf die eine Spur von einer ersten Leseposition zu einer zweiten Leseposition hin, die von der ersten Leseposition getrennt liegt, verschoben zu werden, und zwar in einer Richtung quer zu der Spurverfolgungslinie an der genannten vorgewählten Stelle und um eine vorbestimmte Eichungsstrecke ($X_1$-$X_2$), und um die jeweiligen Werte ($V_1$, $V_2$) des Differenzsignals ($V_A$, $V_B$) an der ersten und der zweiten Leseposition zu bestimmen und das Verhältnis der vorbestimmten Eichstrecke ($X_1$-$X_2$) bei der Differenz ($V_1$ - $V_2$) zwischen den jeweiligen Werten zu verwenden, um eine Meßgröße (K) der Empfindlichkeit des Lese-/Schreibkopfes vorzusehen; und

daß die Entfernungsmeßgröße (OF) aus dem Differenzsignal ($V_A$ - $V_B$) in Abhängigkeit von der Meßgröße (K) der Kopfempfindlichkeit ableitbar ist.

2. Magnetplatten-Treibereinheit nach Anspruch 1, bei der die erste Leseposition zu der einen Seite der beabsichtigten Spurverfolgungslinie hin versetzt ist und bei der die zweite Leseposition zu der gegenüberliegenden Seite dieser Linie hin versetzt ist.

3. Magnetplatten-Treibereinheit nach Anspruch 1 oder 2, mit einer Vielzahl von derartigen Datenspeicherflächen, wobei auf jeder derselben vorbestimmte Spuren zum Speichern von Daten vorgesehen sind, die an die Einheit angelegt werden und um an einer vorbestimmten Stelle entlang einer dieser Spuren vorbestimmte Servoinformationen zu speichern, die einen ersten Informationspunkt (A) umfassen, der in einem vorbestimmten Ausmaß (X) zu einer Seite einer beabsichtigten Spurverfolgungslinie hin versetzt ist, und einen zweiten Informationspunkt (B) umfassen, der in einem vorbestimmten Ausmaß (X) zu der gegenüberliegenden Seite der beabsichtigten Spurverfolgungslinie hin versetzt ist; und auch mit einer Vielzahl derartiger Lese-/Schreibköpfe (2), die jeweils in Gegenüberlage zu den Datenspeicherflächen angeordnet sind und über diesen zwischen den Datenspuren bewegbar sind, um Daten von der in Betracht stehenden Fläche zu lesen oder in diese einzuschreiben;

wobei die Kopf-Versatz-Detektorschaltungsanordnung (3, 6) betreibbar ist, wenn sie sich in ihrem Selbst-Eich-Modus befindet, um eine Versatz-Detektionsoperation hinsichtlich einem der bezeichneten Lese-/Schreibköpfe (2) von der Vielzahl der Köpfe durchzuführen, bei welcher Operation die Empfindlichkeits-Detektoreinrichtung (6) den bezeichneten Lese-/Schreibkopf (2) veranlaßt, parallel zu seiner gegenüberliegenden Datenspeicherfläche und seitlich hinsichtlich der einen Spur dieser Fläche von einer ersten Leseposition zu einer zweiten Leseposition, die von der ersten Leseposition getrennt angeordnet ist, in einer Richtung quer zu der Spurverfolgungslinie bei der genannten vorgewählten Stelle auf dieser Fläche versetzt zu werden, und zwar um einen vorbestimmten Eichungsabstand (X1-X2), und um die jeweiligen Werte (V1, V2) des Differenzsignals ($V_A$ - $V_B$) an der ersten und der zweiten Leseposition zu bestimmen und um das Verhältnis der vorbestimmten Eichstrecke (X1-X2) zu der Differenz (V1-V2) zwischen den jeweiligen Werten dazu zu verwenden, um eine solche Meßgröße (K) der Empfindlichkeit des bezeichneten Lese-/Schreibkopfes zu ermitteln, woraufhin eine solche Abstandsmeßgröße (OF) für den bezeichneten Lese-/Schreibkopf dadurch abgeleitet wird, indem der Differenzsignalwert mit der Empfindlichkeitsmeßgröße (K) für den bezeichneten Kopf multipliziert wird; wobei die Einheit ferner eine Versatz-Speichereinrichtung (4) enthält, um die Abstandsmeßgröße (OF) für jeden der Vielzahl der Köpfe zu speichern; und die Treibereinrichtung (5) betreibbar ist, wenn einer der Vielzahl der Lese-/Schreibköpfe (2), bei dem eine Versatz-Detektionsoperation ausgeführt worden ist, zum Lesen oder Schreiben ausgewählt wurde, den ausgewählten Kopf in Abhängigkeit von der gespeicherten Abstands- oder Streckenmeßgröße (OF) für diesen Kopf zu bewegen, um dadurch die Strecke zu reduzieren, um die der in Betracht stehende Kopf aus seiner beabsichtigten Spurverfolgungslinie während eines solchen Lesevorganges oder Schreibvorganges versetzt ist.

4. Magnetplatten-Treibereinheit nach irgendeinem der vorhergehenden Ansprüche, bei der die Abstandsmeßgröße (OF) für den oder für jeden Lese-/Schreibkopf (2) aus dem Wert des Differenzsignals ($V_A$ - $V_B$) abgeleitet ist, welches erzeugt wird, wenn der in Betracht stehende Lese-/Schreibkopf durch die Treibereinrichtung (5) gesteuert wird, damit er sich auf einer angenommenen Auf-Spur-Position basierend auf Servoinformationen befindet, die von einer Servoplatte der Magnetplatten-Treibereinheit abgeleitet wurden.

5. Magnetplatten-Treibereinheit nach Anspruch 4 in Rückbeziehung auf Anspruch 3, bei der dann, wenn die Kopf-Versatz-Detektorschaltungsanordnung (3, 6) sich in ihrem Selbst-Eich-Modus befindet, die Empfindlichkeits-Detektoreinrichtung (6) zuerst die Empfindlichkeitsmeßgröße (K) für den in Betracht stehenden Lese-/Schreibkopf (2) bestimmt, danach die Kopf-Versatz-Detektorschaltungsanordnung (3) Signale verarbeitet, die jeweils von den ersten und zweiten Informationspunkten (A, B) abgeleitet wurden, und zwar für den in Betracht stehenden Lese-/Schreibkopf an der angenommenen Auf-Spur-Position, einen Differenzsignalwert ($V_A$ - $V_B$) basierend auf der Differenz der jeweiligen Spitzenwerte der abgeleiteten Signale erzeugt, die Entfernungs- oder Streckenmeßgröße (OF) für den in Betracht stehenden Kopf dadurch berechnet, indem der Differenzsignalwert mit der Empfindlichkeitsmeßgröße (K) für den Kopf multipliziert wird, und diese Streckenmeßgröße (OF) in der Versatz-Speichereinrichtung (4) abspeichert.

6. Magnetplatten-Treibereinheit nach irgendeinem der vorhergehenden Ansprüche, bei der die Empfindlichkeits-Detektoreinrichtung (6) die Empfindlichkeitsmeßgröße (K) gleich macht dem Verhältnis der vorbestimmten Eichstrecke (X1-X2) zu der Differenz (V1-V2) zwischen den jeweiligen Werten des Differenzsignals ($V_A$ - $V_B$) an der genannten ersten und zweiten Leseposition.

7. Magnetplatten-Treibereinheit nach irgendeinem der vorhergehenden Ansprüche, bei der die Empfindlichkeits-Detektoreinrichtung (6) so betreibbar ist, um die Empfindlichkeitsmeßgröße (K) des oder jedes Lese-/Schreibkopfes in einem Empfindlichkeitsspeicherabschnitt (7) der Plattentreibereinheit zu speichern.

8. Magnetplatten-Treibereinheit nach Anspruch 3, ferner mit einer Steuereinrichtung (14) zum Steuern des Betriebes der Einheit;

bei der die Kopf-Versatz-Detektorschaltungsanordnung (3, 6) in Abhängigkeit von einem vorbestimmten Steuersignal, welches an die Schaltungsanordnung angelegt wird, so betreibbar ist, um einen Versatz-Detektionsprozeß zu initialisieren, bei dem jeder der Vielzahl der Lese-/Schreibköpfe (2) seinerseits bezeichnet wird und an diesem eine derartige Versatz-Detektionsoperation durchgeführt wird; und bei der die Schaltungsanordnung derart ausgeführt ist, daß dann, wenn während des Verlaufes des Versatz-Detektionsprozesses die Steuereinrichtung (14) einen Befehl empfängt, der eine vorgewählte Operation erforderlich macht, und zwar eines Typs, der verschieden ist von dem Versatz-Detektionsprozeß, die Ausführung dieses Prozesses nach der Erzeugung der genannten Entfernungsmeßgröße (Ofx) für den in Behandlung stehenden Kopf ausgesetzt wird, wenn der Befehl empfangen wird, woraufhin dann die vorgewählte Operation ausgeführt wird, und nach der Vervollständigung der Ausführung dieser Operation der Versatz-Detektionsprozeß wieder aufgenommen wird.

**Revendications**

1. Unité de lecteur de disque magnétique incluant :

un disque magnétique (1) comportant une surface de stockage de données sur laquelle il y a des pistes prédéterminées pour stocker des données appliquées à l'unité et pour stocker, en un emplacement présélectionné le long de l'une de ces pistes, une information d'asservissement prédéterminée comprenant un premier élément d'information (A) décalé jusqu'à une étendue prédéterminée (X) sur un côté d'une ligne de suivi de piste attendue et un second élément d'information (B) décalé jusqu'à une étendue prédéterminée (X) sur le côté opposé de ladite ligne de suivi de piste attendue ;
une tête de lecture/écriture (2) agencée en opposition à ladite surface de stockage de données et déplaçable dessus entre lesdites pistes de données pour lire des données sur cette surface ou pour écrire des données dessus ;
un circuit de détection de décalage de tête (3, 6) connecté à ladite tête de lecture/écriture (2) pour traiter les signaux ($V_A$, $V_B$) dérivés respectivement à partir desdits premier et second éléments d'information (A, B) afin de produire un signal de différence ($V_A$ - $V_B$) qui est utilisé pour dériver une mesure (OF) de la distance dont la tête de lecture/écriture est décalée par rapport à ladite ligne de suivi de piste attendue ; et

un moyen de lecteur (5) agencé et connecté pour déplacer ladite tête de lecture/écriture (2) en fonction de la mesure de distance (OF) dérivée à partir dudit signal de différence $(V_A - V_B)$ de manière à réduire ladite distance dont ladite tête de lecture/écriture est décalée par rapport à ladite ligne de suivi de piste attendue,

caractérisée en ce que le circuit de détection de décalage de tête inclut un moyen de détection de sensibilité (6) pouvant fonctionner dans un mode d'auto-étalonnage du circuit pour faire en sorte que ladite tête de lecture/écriture (2) soit déplacée parallèlement à la surface de stockage de données et latéralement par rapport à ladite une piste depuis une première position de lecture jusqu'à une seconde position de lecture séparée de la première position de lecture suivant une direction transversale à ladite ligne de suivi de piste audit emplacement présélectionné d'une distance d'étalonnage prédéterminée $(X_1 - X_2)$ et afin de déterminer les valeurs respectives $(V_1, V_2)$ dudit signal de différence $(V_A, V_B)$ au niveau desdites première et seconde positions de lecture et afin d'utiliser le rapport de ladite distance d'étalonnage prédéterminée $(X_1 - X_2)$ sur la différence $(V_1 - V_2)$ entre lesdites valeurs respectives afin de produire une mesure (K) de la sensibilité de la tête de lecture/écriture ;

et en ce que :

ladite mesure de distance (OF) est dérivée à partir dudit signal de différence $(V_A - V_B)$ en fonction d'une mesure (K) de la sensibilité de tête.

2. Unité de lecteur de disque magnétique selon la revendication 1, dans laquelle ladite première position de lecture est décalée sur ledit un côté de ladite ligne de suivi de piste attendue et ladite seconde position de lecture est décalée sur ledit côté opposé de cette ligne.

3. Unité de lecteur de disque magnétique selon la revendication 1 ou 2, comportant une pluralité de surfaces de stockage de données et sur chacune d'elles, se trouvent des pistes prédéterminées pour stocker des données appliquées à l'unité et pour stocker, en un emplacement présélectionné le long de l'une de ces pistes, une information d'asservissement prédéterminée comprenant un premier élément d'information (A) décalé jusqu'à une étendue prédéterminée (X) sur un côté d'une ligne de suivi de piste attendue et un second élément d'information (B) décalé jusqu'à une étendue prédéterminée (X) sur le côté opposé de ladite ligne de suivi de piste attendue ; et comprenant aussi une pluralité de telles têtes de lecture/écriture agencées respectivement en opposition à ladite surface de stockage de données et déplaçables dessus entre lesdites pistes de données pour lire des données sur cette surface ou pour écrire des données dessus ;

dans laquelle ledit circuit de détection de décalage de tête (3, 6) peut être activé, lorsqu'il est dans son dit mode d'auto-étalonnage, pour réaliser une opération de détection de décalage sur l'une désignée des têtes de lecture/écriture (2) de ladite pluralité, opération au cours de laquelle le moyen de détection de sensibilité (6) a pour effet que la tête de lecture/écriture désignée (2) est déplacée parallèlement à sa surface de stockage de données opposée et latéralement par rapport à ladite une piste de cette surface depuis une première position de lecture jusqu'à une seconde position de lecture séparée de la première position de lecture suivant une direction transversale à ladite ligne de suivi de piste audit emplacement présélectionné sur cette surface d'une distance d'étalonnage prédéterminée $(X_1 - X_2)$ et afin de déterminer les valeurs respectives $(V_1, V_2)$ dudit signal de différence $(V_A, V_B)$ au niveau desdites première et seconde positions de lecture et afin d'utiliser le rapport de ladite distance d'étalonnage prédéterminée $(X_1 - X_2)$ sur la différence $(V_1 - V_2)$ entre lesdites valeurs respectives afin de produire une mesure (K) de la sensibilité de la tête de lecture/écriture désignée, suite à quoi une telle mesure de distance (OF) pour la tête de lecture/écriture désignée est dérivée en multipliant la valeur de signal de différence par ladite mesure de sensibilité (K) pour la tête désignée ; l'unité incluant en outre un moyen de stockage de décalage (4) pour stocker la mesure de distance (OF) pour chaque tête de ladite pluralité ; et

ledit moyen de lecteur (5) pouvant être activé lorsque l'une des têtes de lecture/écriture (2) de ladite pluralité sur laquelle une telle opération de détection de décalage a été réalisée est sélectionnée pour la lecture ou pour l'écriture, pour déplacer la tête sélectionnée en fonction de la mesure de distance stockée (OF) pour cette tête, de manière à réduire ladite distance dont la tête concernée est décalée par rapport à sa dite ligne de suivi de piste attendue pendant cette lecture ou écriture.

4. Unité de lecteur de disque magnétique selon l'une quelconque des revendications précédentes, dans laquelle ladite mesure de distance (OF) pour la ou chaque tête de lecture/écriture (2) est dérivée à partir de la valeur dudit signal de différence $(V_A - V_B)$ produite lorsque ladite tête de lecture/écriture concernée est commandée par ledit moyen de lecteur (5) pour être en une position sur piste supposée sur la base d'une information d'asservissement dérivée à partir d'un disque asservi de l'unité de lecteur de disque magnétique.

5. Unité de lecteur de disque magnétique selon la revendication 4 lorsqu'elle dépend de la revendication 3, dans laquelle, lorsque le circuit de détection de décalage de tête (3,6) est dans son dit mode d'auto-étalonnage, ledit moyen de détection de sensibilité (6) détermine tout d'abord ladite mesure de sensibilité (K) pour la tête de lecture/écriture (2) concernée, suite à quoi le circuit de détection de décalage de tête (3) traite des signaux dérivés respectivement à partir des premier et second éléments d'information (A, B) tandis que la tête de lecture/écriture concernée est à ladite position sur piste supposée, produit une telle valeur de signal de différence ($V_A$ - $V_B$) sur la base de la différence au niveau des valeurs de crête respectives des signaux dérivés, calcule ladite mesure de distance (OF) pour la tête concernée en multipliant cette valeur de signal de différence par la mesure de sensibilité (K) pour la tête et stocke cette mesure de distance (OF) dans ledit moyen de stockage de décalage (4).

6. Unité de lecteur de disque magnétique selon l'une quelconque des revendications précédentes, dans laquelle ledit moyen de détection de sensibilité (6) rend ladite mesure de sensibilité (K) égale audit rapport de ladite distance d'étalonnage prédéterminée (X1 - X2) sur ladite différence (V1 - V2) entre les valeurs respectives dudit signal de différence ($V_A$ - $V_B$) auxdites première et seconde positions de lecture.

7. Unité de lecteur de disque magnétique selon l'une quelconque des revendications précédentes, dans laquelle ledit moyen de détection de sensibilité (6) peut être activé pour stocker ladite mesure de sensibilité (K) de la ou chaque tête de lecture/écriture dans une section de stockage de sensibilité (7) de l'unité de lecteur de disque.

8. Unité de lecteur de disque magnétique selon la revendication 3, comprenant en outre un moyen de commande (14) pour commander le fonctionnement de l'unité,

dans laquelle ledit circuit de détection de décalage de tête (3, 6) peut être activé, en réponse à un signal de commande prédéterminé appliqué sur le circuit, pour initier un processus de détection de décalage au cours duquel chacune des têtes de lecture/écriture (2) de ladite pluralité est désignée tour à tour et une telle opération de détection de décalage est réalisée dessus ; et le circuit est tel que, si au cours dudit processus de détection de décalage, ledit moyen de commande (14) reçoit une commande appelant une opération présélectionnée d'un type différent dudit processus de détection de décalage, l'exécution de ce processus est suspendue suite à la production de ladite mesure de distance (OFx) pour la tête qui est concernée lorsque la commande est reçue, suite à quoi ladite opération présélectionnée est exécutée, ledit processus de détection de décalage étant repris après la fin de l'exécution de cette opération.

## Fig. 1

## Fig. 2A

## Fig. 2B

## Fig. 2C

# Fig. 3

A

OUTWARD

X

ONTRACK

X

2

INWARD

B

# Fig. 4

8    9

1 SECTOR

A

B

# Fig. 5

*Fig. 6A*

*Fig. 6B*

*Fig. 6C*

# Fig. 7

$V_A - V_B$

(INWARD)

(OUTWARD)

OFFSET

# Fig. 8

10 AGC REGION

2

A

B

n + 1 TRACK

n TRACK

n − 1 TRACK

# Fig. 9

V1

$\sim V_A1$

B

A

$V_B1$

AGC
REGION

V2

$\sim V_A2$

B

$V_B2$

A

AGC
REGION

HEAD OUTPUT
SMALL

HEAD OUTPUT
LARGE

$V1 < V2$

$$\frac{V_A1}{V1} = \frac{V_A2}{V2}$$

$$\frac{V_B1}{V1} = \frac{V_B2}{V2}$$

$V_A$

$V_B$

$V_A$

$V_B$

# Fig. 10A

EP 0 511 862 B1

OFFSET DETECTOR

3

7

SENSITIVITY
STORAGE

6

SENSITIVITY
DETECTOR

$$K = \frac{(X1-X2)}{(V1-V2)}$$

1

DISK MEDIUM

ONTRACK

OUTWARD

A

B

2

INWARD

4

OFFSET
STORAGE

5

OFFSET
CORRECTOR

HEAD
CONTROLLER

# F I g. 10B

Fig. 11

MAGNETIC DISK UNIT

COMMAND
CONTROL
MPU

94

MEASUREMENT
TIMING
SETTING
CIRCUIT

95 INTERRUPTER

90

HOST
UNIT

DRIVE
CONTROL
MPU

3

OFFSET
DETECTOR

2

2

2

34

VCM

SP

14

40

EP 0 511 862 B1

# Fig. 12

Fig. 13

| Fig. 13A | Fig. 13B |

# Fig. 13A

DRIVE CONTROL MPU — 40

POWER AMP. — 54

SERVO DEMODULATION CIRCUIT — 42

64 — PEAK HOLD CIRCUIT

PEAK HOLD CIRCUIT — 66

READ WRITE CIRCUIT — 74

DAC — 52

CONVERSION CIRCUIT — 44

DIFFERENTIAL CIRCUIT — 68

$V_A$

$V_B$

READ/WRITE CONTROL CIRCUIT — 72

SERVO COMPEN-SATOR — 50

POSITION DETECTOR — 46

ADC — 70

$(V_A - V_B)$

48

+ / −

TO 22

OFFSET CORRECTOR — 79

OFFSET STORAGE (RAM) — 77

OFFSET DETECTOR — 75

TO 18

Fig. 13

| Fig. 13A | Fig. 13B |

# Fig. 13B

DISK ENCLOSURE (DE)    56

```
36                              60

┌──────────────┐          ┌──────────────┐
│   V C M      │──────────│    HEAD      │
│              │          │  ACTUATOR    │
└──────────────┘          └──────────────┘
                                  │
                                  │      34
                          ┌──────────────┐
                          │  SERVO HEAD  │
62                        └──────────────┘
                                  │      2-1
┌──────────────┐          ┌──────────────┐
│   HEAD       │◄────────►│  DATA  HEAD  │
│              │          └──────────────┘
│              │                  │      2-2
│   SELECTOR   │◄────────►┌──────────────┐
│              │          │  DATA  HEAD  │
│              │          └──────────────┘
│              │                  │      2-n
│              │◄────────►┌──────────────┐
└──────────────┘          │  DATA  HEAD  │
                          └──────────────┘
```

# Fig. 14

```
OFFSET DATA
DETECTING PROCESS
        |
        v
SEEK OPTIONAL TRACK          —S1
        |
        v
SELECT  HEAD  No.1           —S2
        |
        v
OUTWARDLY OFFSET             —S3
HEAD BY X1
        |
        v
READ DIFFERENTIAL           —S4
VOLTAGE
(VA — VB) = V1
        |
        v
INWARDLY OFFSET             —S5
HEAD BY X2
        |
        v
READ DIFFERENTIAL          —S6
VOLTAGE
(VA — VB) = V2
        |
        v
CALCULATE                  —S7
PROPORTIONAL
COEFFICIENT
Kn = (X1−X2)/(V1−V2)
        |
        v
   <FINAL HEAD ?>   —S8
  NO /        \ YES
```

S9

SELECT NEXT HEAD

$K_n = (X1-X2)/(V1-V2)$

$(V_A - V_B) = V1$

$(V_A - V_B) = V2$

STORE Kn IN MEMORY          —S10

E N D

## Fig. 15

| HEAD No. | PROPORTIONAL CONSTANT |
|:---:|:---:|
| 1 | K1 |
| 2 | K2 |
| 3 | K3 |
| 4 | K4 |
| 5 | K5 |
| 6 | K6 |
| ⋮ | ⋮ |
| 11 | K11 |

## Fig. 16

| HEAD No. | OFFSET |
|:---:|:---:|
| 1 | OF1 |
| 2 | OF2 |
| 3 | OF3 |
| 4 | OF4 |
| 5 | OF5 |
| 6 | OF6 |
| ⋮ | ⋮ |
| 11 | OF11 |

EP 0 511 862 B1

# Fig. 17

CONVERSION CIRCUIT

EP 0 511 862 B1

EP 0 511 862 B1

## Fig. 18

## Fig. 19A

| Fig. 19 | Fig. 19A |
| --- | --- |
| | Fig. 19B |

HOST UNIT | COMMAND CONTROL MPU 14 | DRIVE CONTROL MPU 40

(B1) DETECT MEASUREMENT START TIME.

(B2) ISSUE INSTRUCTION TO SEEK SPECIFIC CYLINDER WHERE SERVO INFORMATION IS RECORDED ON DATA SURFACE TO DETECT THERMAL OFFSETS.

(C1) SEEK SPECIFIC CYLINDER S.

(B3) ISSUE INSTRUCTION TO MEASURE THERMAL OFFSET OF HEAD 0.

(C2) DETECT THERMAL OFFSET OF HEAD 0.

(B4) ISSUE INSTRUCTION TO MEASURE THERMAL OFFSET OF HEAD 1.

(C3) DETECT THERMAL OFFSET OF HEAD 1.

(B5) ISSUE INSTRUCTION TO MEASURE THERMAL OFFSET OF HEAD 2.

(A1) ISSUE COMMAND FOR READING CYLINDER A.

(C4) DETECT THERMAL OFFSET OF HEAD 2.

EP 0 511 862 B1

$$Fig. 19B$$

| | Fig.19 A |
|---|---|
| Fig. 19 | Fig. 19B |

(B6) ISSUE COMMAND FOR SEEKING CYLINDER A AND TRANSFER DATA THROUGH BUFFER.

(C5) SEEK AND READ CYLINDER A.

(B7) ISSUE COMMAND FOR SEEKING REFERENCE CYLINDER S.

(C6) SEEK SPECIFIC CYLINDER S.

(B8) ISSUE INSTRUCTION FOR MEASURING THERMAL OFFSET OF HEAD 3.

(C7) DETECT THERMAL OFFSET OF HEAD 3.

(Bn) END OF OFFSET MEASUREMENT

EP 0 511 862 B1

# Fig. 20A

| HOST UNIT | COMMAND CONTROL MPU 14 | DRIVE CONTROL MPU 40 |
|---|---|---|

(C1) REQUEST FOR AUTMATIC ADJUSTMENT.

(B1) DETERMINE TO OR NOT TO ENABLE AUTOMATIC ADJUSTMENT.

(B2) ISSUE AUTOMATIC ADJUSTMENT COMMAND.

(C2) START MEASURING THERMAL OFFTRACK.

(C3) SEEK SERVO CYLINDER.

(C4) MEASURE OFFRACK OF HEAD O.

(C5) CONFIRM INTERRUPT REQUEST.

(C6) MESURE OFFRACK OF HEAD 1.

(A1) ISSUE READ COMMAND

(B3) START TO RECEIVE READ COMMAND.

(B4) COMPLETELY RECEIVE READ COMMAND.

(C7) CONFIRM INTERRUPT REQUEST.

| Fig.20 | Fig.20A |
|---|---|
| | Fig.20B |

EP 0 511 862 B1

Fig. 20 | Fig. 20A / Fig. 20B

# Fig. 20B

(B5) INTERRUPT AUTMATIC ADJUSTMENT.
(CHECK WHETHER OR NOT CACHE DATA HAS BEEN HIT.)

(C8) MESURE OFFTRACK OF HEAD 2.

(C9) CONFIRM INTERRUPT REQUEST.

(C10) STORE INTERRUPT POSITION.

(C11) END OF INTERRUPT.

NORMAL SEQUENCE FOR READ COMMAND

(B6) ISSUE AUTOMATIC ADJUSTMENT RESUME COMMAND.

(C12) CONFIRM INTERRUPT POSITION.

(C13) MESURE OFFSET OF HEAD 3.

(C14) CONFIRM INTERRUPT REQUEST.

(C15) MESURE OFFTRACK OF HEAD 4.

(Cn) INFORM OF COMPLETION OF AUTOMATIC ADJUSTMENT.

EP 0 511 862 B1

# Fig. 21

# Fig. 22